# EUROPÄISCHE PATENTSCHRIFT

(11) **EP 2 208 409 B1**
(45) Veröffentlichungstag und Bekanntmachung des Hinweises auf die Patenterteilung: **07.11.2012**
(21) Anmeldenummer: 10000092.6
(22) Anmeldetag: 08.01.2010
(51) Int. Cl.: A01C 5/06

(54) **Säschar-Modul für die Direktsaat und Direktsaat-Maschinenkombination**
Seed drill coulter module for direct sowing and direct sowing machine combination
Module de semeuse pour le semis direct et combinaison de machines de semis direct

(30) Priorität: 15.01.2009 DE 102009004767
(43) Veröffentlichungstag der Anmeldung: 21.07.2010
(73) Patentinhaber: Güttler, Fritz, 73235 Weilheim (DE)
(72) Erfinder: Güttler, Fritz, 73235 Weilheim (DE)
(74) Vertreter: Patentanwälte Ruff, Wilhelm, Beier, Dauster & Partner

(56) Entgegenhaltungen:
- EP-A1- 0 521 845
- EP-A1- 0 891 691
- WO-A1-2009/054999
- US-A- 4 289 081

## Beschreibung

Die Erfindung betrifft ein Säschar-Modul für die Direktsaat und eine Direktsaat-Maschinenkombination und ein Direktsaatverfahren.

Die Erfindung betrifft die Weiterbildung der aus dem Stand der Technik bekannten Scheiben-Direkt-Säschare an Sämaschinen für die Zukunftstechnologie "Direktsaat ohne Pflug" und darauf fußend eine technisch mehrfach variable Direktsaat-Maschinenkombination unter Verwendung und Integration vorhandener Sämaschinentechnik.

### Stand der Technik und Anwendungsverfahren:

Direktsaat ist mehr als nur das in den vergangenen Jahrzehnten in der Acker- und Landwirtschaftung aufgekommene "Mulchsaatverfahren", das nur eine flachgründige, jedoch ganzflächige Aufarbeitung der Vorfrucht-Rückstände und Vermischung mit wenig Bodenmasse kennt. Die Direktsaat hingegen ist die Einsaat in festgelagerten und mit Pflanzrückständen der Vorfrucht bedeckten und/oder noch verwurzelten Bodens ohne jegliche Vorarbeit und nachhaltendem Pflugverzicht auf Dauer, wie es weltweit in Hektar-Niedrigertragsböden z. B. Nordamerikas, Kanadas, Neuseelands, Australiens und anderswo bekannt und nachhaltend zur Regel geworden ist, weil das Pflügen im Verhältnis zum damit erzielbaren Flächenertrag einfach zu teuer und total unwirtschaftlich geworden ist. Explodierende Diesei-Kraftstoffkosten öffnen die Kostenschere noch weiter. Nicht zu vergessen, deren klimaschädlichen CO²-Emissionsausstoß.

Begünstigt wurde dort die Direktsaat mit totalem Pflugverzicht allerdings durch den relativ geringen Strohanfall je Flächeneinheit, der erfahrungsgemäß und im Regelfall 1:1 zum Kornertrag ist und dort nur etwa zwischen 20-30 Dezitonnen je Hektar beträgt. Infolgedessen gibt es dort selbst bei Spezial-Direkt-Sämaschinen mit Zinkensäscharen kaum Verstopfungsprobleme bei der Saat, wohingegen Letztere in unseren Breitengraden mit im Regelfall den drei- bis vierfachen Hektar-Korn- und Stroherträgen massive Verstopfungsprobleme haben und mit weiterem Kraftstoffverbrauch und CO²-Ausstoß nachhäckseln müssen, die die Scheibenschar-Direkt-Sämaschinen nicht kennen und hier wie auch dort überwiegen.

Beide Direktsaat-Sämaschinen-Typen vorzugsweise jedoch die Scheibenschar-Typen finden inzwischen auch in Europa und anderen Erdteilen hohes Interesse bei elitären Landwirten, Wissenschaft, Beratern und Publizisten mit laufenden Versuchsanstellungen zur Optimierung des Verfahrens und der bislang bekannten maschinentechnischen Gegebenheiten, wozu die um die Jahrhundertwende in die Praxis Eingang gefundene sogenannte "Mulchsaat" zwar ein Schritt auf den Weg zur "Direktsaat" ist, aber noch lange nicht das Ziel "Direktsaat" erreicht. Die Direktsaat ist also mehr als nur die "Mulchsaat" die keinen konsequenten Pflugverzicht anvisiert, sondern eine ganzflächig, wenn auch nur flache Bodenbearbeitung und sich als Kompromiss begreift.

Die Wirkungseffekt-Vorgaben der klassischen Direktsaat greifen aber weit darüber hinaus. Sie zielt gleichrangig die Verwirklichung folgender Wirkeffekt-Vorgaben an, vor allem den Wasser/Wind-Erosionsschutz, die ganzjährige Bodendeckung, den Bodenschutz durch weniger Schlepper- und Fahrzeugspuren, die Humusbildung- und Anreicherung von organischer Substanz im Boden, die Förderung und Erhalt des Bodenkleinlebewesens und Bodenfruchtbarkeit insbesondere die vitale Regenwurmpopulation, der Bodenwasserkapillarführenden und deren Versiegelung und an das Grundwasser anbindenden kapillaren Verzahnung mit den Regenwurmröhren, der Anreicherung und Konservierung des Bodenwassers und Humus, der Kohlenstoffverbindungen und Reduzierung unproduktiver Wasserverluste und nicht zuletzt die deutliche Verminderung des klimaschädlichen CO²-Ausstoßes je Hektar-Ackerfläche, inklusive der Reduzierung des durchschnittlich 35I-40I Dieselverbrauchs je Hektar des Pflug-Pflanzen/Ackerbaus mit entsprechendem CO²-Ausstoß.

All das zu verwirklichen setzt Bearbeitungsruhe des Bodens voraus. Die Direktsaat passt deshalb auch vorrangig in Trockengebietzonen und nicht weniger gut in tonhaltigen, schweren Problemböden, zumal wenn sie mit schotterartigem Steinbesatz, zuweilen verschlämmt und unter nachfolgender Hitze knochenhart ausgetrocknet, nach der Ernte mit Häckselstroh- und Restpflanzenauflage vorliegen, die bekanntlich sehr hohen Pflüge- und Saatbettbereitungs-Arbeiterledigungskosten von nachweislich *₁ bis zu € 200,00 pro Hektar und mehr verursachen. Selbst oder gerade unter solchen Gegebenheiten sind mindestens gleich hohe und zum Teil sogar höhere Erträge *_{1,2} mit Direktsaat nachgewiesen. Wenn die nach dem Stand der Technik bekannten Scheibenschare zuverlässig in der Lage wären, alle Samenkörner in optimaler Saattiefe in sachgerecht guter acker-/pflanzenbaulicher Praxis mit Kapillarwasseranbindung einzubetten *₂, mit gut gekrümelter, somit schnell erwärmbarer und speichernder Krümelerde abzudecken und Stroh über der Saatreihe hinweg zu räumen, kämen diese, von haus aus gar nicht ertragsschwachen, mit Humus und anderen Kohlenstoffverbindungen oft gut versorgt, aber durch widriges Witterungsgeschehen vor oder zum anstehenden optimalen Aussaattermin problematisiert, kämen bei besagter fach- und sachgerecht optimaler Samenablage und - einbettungsqualität in die Erde und bei guter Bestandsführung, wären Ernteerträge in der "Oberklasse" erfahrungsgemäß ohne Abstriche erwartbar, wenn die Saat hätte ordnungsgemäß in den Boden gebracht werden können und dazu eine reihennahe Banddüngergabe "Wie die Saat .... so die Ernte"!

Die anderen Direktsaat-Problemböden sind paradoxerweise die sandigen Mineralböden mit geringem Dauerhumusanteil. Infolge nicht unterbrochener Kapillarität unter den Pflanzenrückständen, Grünzeug, Stoppelwurzel und angedrücktem Häckselstroh bleiben sie dicht, fest, feucht und kalt gelagert nach der Einsaat, erwärmen sich schlecht und langsam. Zögerliche und schlechte Keimung, lückiger Saataufgang, verhaltene Jugendentwicklung und verminderte Hektar-Ernteerträge sind die Folge, wenn nicht eine neuheitlich verbesserte Saat-Einbettungstechnik gegensteuern und sogar vorteilhaft um-nutzen könnte.

Dieser Aufgabenstellung nimmt sich die gegenständliche Erfindung an, indem sie ein aus dem Stand der Technik stammendes Scheiben-Direktsäschar neuheitlich und dazu kostenneutral so weiterbildet, dass es nicht nur dieser unmittelbaren Aufgabenstellung gerecht wird, sondern die zu zehntausenden in Ackerbaubetrieben vorhandene Schlepperanbau, Aufsattel- und Anhängesämaschinen egal welchen Fabrikats, Arbeitsbreite und Säscharart möglichst kostenneutral, zumindest mit relativ geringem Kostenaufwand in eine bessere verlässlich vollwertig, klassische Scheibenschar-Direkt-Sämaschine umwandelt, die eine nach guter ackerpflanzenbaulicher Praxis die ordnungsgemäße keimungs- und wachstums- sowie ertragssichernde Sameneinbettung auch in schwierige Problemböden sicherzustellen vermag.

Maschinen mit Zielrichtung "Direktsaat" verschiedener Hersteller sind bekannt geworden, wie z. B. federführend von John Deere, TUME, AGRISEM und andere, ferner die Anmelder eigenen DE 197 30 822C2 und EP 0 891 691 B2 mit dem unter www.Guettler.de ins Internet gestellten Abschlussbericht zu dem F.- und E.-Projekt. "Direktsaat von Zwischenfrüchten (und Hauptfrucht Winterraps) in Verbindung mit dem Mähdrusch", Aktenzeichen 06664 *3 der Universität Hohenheim (Prof. Dr. Dr. h. c. Jürgen Zeddies) vom 01. April 2000. Sehr beachtenswert ist der dabei gemessene niedrige Energie-/Kraftverbrauch von 800W je Saatreihe bei 8cm Saatrillentiefe in festgelagerten Böden der Vorfrucht. Bei Getreide-Vorfrucht und Getreide-Nachfrucht und 4cm mittlere Saattiefe sind sicher nicht mehr als 400W je Saatreihe erforderlich, was als extrem leichtzügig gilt.

Hervorzuheben ist ebenfalls die sachlich qualifizierte und tadellose Sameneinbettung unter einem Mähdrescher während über 1.000ha Versuchseinsätzen in Süd, Ost, West und Nord bis inklusiv Mittelschweden bei der Getreideernte mit gleichzeitiger Zwischenfrucht- sowie Raps-Hauptfrucht-Einsaat ohne Reihendüngergabe mit durch die Bank überraschend "pflugebenbürtigen" Ernteergebnissen, die dokumentiert sind.

Allen fehlt eine Einrichtung für die zur klassischen Direktsaat unerlässliche und zum Saatkorn örtlich naheliegende Reihendüngung und ist dort technisch kaum unterzubringen, es sei denn, sie würden völlig neu konstruiert. Aber selbst dann blieben grundsätzliche Säscharmängel offen, um die es signifikant geht.

In neuerer Zeit ist außerdem die Baker Cross-Slot No-Till Direkt-Sämaschine *₄ mit einer solchen Reihendüngereinrichtung auf dem EU-Markt erschienen. Sie formt mit ihren speziellen Scheibenscharen Kreuzschlitze in den unbearbeiteten Boden. In die Seitenarme dieser Schlitze legt sie räumlich voneinander getrennt auf der einen Scheibenscharseite die Samenkörner und auf der Gegenseite Düngemittel für die Jungpflanzen raumnahe erreichbar ab, was der vorher benannten Scheibendirekt-Sämaschine inklusive der John Deere fehlt und was in der Tat der "Punkt auf dem I" wäre, wenn einer weiten Verbreitung der Anschaffungspreis für eine 3m-Maschine von € 100.000,00 zzgl. MwSt. nicht entgegenstünde und Neueinsteiger nicht abschrecken würde, was jedoch nicht ihr einziger Schwachpunkt und entscheidungsträchtiger Nachteil ist und bleibt. Als Schlepper-Antriebsleistung sind im Profi-Fahrbericht "Prof. 2/2005: www.profi.com" für die Baker Cross-Slot No-Till 3m Direkt-Sämaschine mit 19 Saatreihen ab 140kW angegeben, was bei 22 Saatreihen hochgerechnet 162kW sind und noch allzu viel ist. Noch gravierend nachteiliger ist ihr Säschar-Funktionsmangel in hart gelagerten tonigen Problemböden, zumal wenn sie mit schotterartigen Steinbesatz vorliegen.

Die Scheibensäschare sind dort trotz hydraulisch unmäßiger Druckverlagerung vom Maschinenleergewicht bis zu 500kg auf jedes Schar nicht auf Saattiefe in den Boden zu zwingen *₅. Sie laufen geradeaus einfach darüber hinweg. Gleiches ist auch bei mit etwa gleichem Gewichts- und Energieaufwand behafteten John Deere-Maschinen festzustellen, die bei geringem oder keinem Steinbesatz im vorgegebenen Geradeauslauf zwar die Bodenkruste einschneiden und eine Furche aufquetschen, häufig nach Saateinlage aber nicht mehr ordnungsgemäß mit Keimwasseranbindung zu schließen vermögen. Signifikante Keim- und Saataufgangsschäden und folglich Ernteschäden sind programmiert. Ihnen und gleichartigen Maschinen fehlt zweitens außerdem die erfolgswichtige Reihendüngertechnik, die erfahrene Direktsaatexperten und Praktiker neben der nach guter pflanzenbaulicher Praxis sicherzustellenden Sameneinbettung in allen Problemböden als unabdingbare Forderung ansehen, um erfolgreich zu sein. Es sind dies die beiden fundamentalbedeutsamen Kriterien, die gebündelt von keiner bisher bekannten Direkt-Säscharmaschine zusammen erfüllt werden. Der einen fehlt Dies, der anderen Das. Den Direktsäschar/en zufolge DE 197 30 822 C2 und EP 0 891 691 B2 fehlt aus platz- und auch technischen Gründen eine Reihen/Banddüngungs-Integrationsmöglichkeit bei Beibehaltung der mitteleuropäisch langjährig bewährten und hochertragreichen Eng-Reihensaat von 12,5cm, die nebenbei einen emotionalen Stellenwert bei den europäischen Pflanzenbauern einnimmt.

Infolge Praxiserfahrung des Anmelders mit auf die Direktsaat angesprochen praktizierenden Landwirte, Berater, Wissenschaftlicher und Medien war durchweg reges Interesse zu hören, aber gleichzeitig der nicht weiterführende und bremsende Vorbehalt fast jedes praktizierenden Landwirtes, dass man aber im Voraus nicht wisse und keine Garantie sehe, dass die klassische Direktsaat seine guten Durchschnittserträge des "Pflug-Ackerpflanzenbaues" zumindest sicherstelle und er deshalb auch in keine so teuere Direkt-Sämaschine investiere, zudem er genug Probleme von bei euphorisch angeschafften Direkt-Sämaschinen gehört habe, die jetzt zur Mulchsaat genutzt werden, wozu seine konventionelle Schlepper-Anbau/Aufsattel-/Anhänge-Sämaschine ja auch taugt. Eine mittels der Direktsaat-Ackerbewirtschaftung möglich erscheinende Arbeits-Erledigungskosten-Reduzierung sei zwar erstrebenswert, wiege das "Flop-Risiko" aber auf keinen Fall auf. Eine mögliche CO²-Reduktion kam dabei nirgends zur Diskussion, die im Gefolge des sich abzeichnenden Klimawandels aber nachhaltig in den Focus rückt, wie die Weltklimaschutz-Konferenz/en als global vorrangige Lösungsaufgabe postulieren und von allen Medien als geopolitische Zielvorgabe der Weltpolitiker ins allgemeine Bewusstsein transportiert und als CO²-Bringschuld allen Ländern, Staaten und deren Volkswirtschaften aufgebürdet wird. Komplizierte und kostspielige Lösungen technisch/biologischer Art werden zuhauf vorgeschlagen, diskutiert und verschiedentlich auch konkret angegangen, jedoch ein natürlicher zudem kostenfreier und hocheffizienter Lösungsbeitrag wird übersehen, nämlich die eigentlich so naheliegende **pfluglose Direktsaat-Pflanzenbau/Ackerbewirtschaftung,** denn nach dem Dänen Björn Lomborg *₇ und anderen Klimaforschern stammen 97% *₇ der jährlichen Emissionen an Kohlendioxid aus der Natur, also mit ihrem Anteil von etwa 133 Millionen Tonnen *₈ mit rund je zur Hälfte aus Ackerbau und Tierhaltung. Eine Lösung des Problems des Ausstoßes von Treibhausgasen (Kohlendioxid) könne nach deren Untersuchungen nur durch die Entwicklung neuer Technologien insbesondere neuer Agrartechnologien *₇ gefunden werden Dazu soll die umfänglich gegenständliche Erfindung ein Stück beisteuern, aber auch Politik und Gesetzgeber sollen es, in dem CO² handelfähige Zertifikate an nachweislich auf Dauer zielende und klassische Direktsaat praktizierende Landwirte vergeben werden, die den Fiskus Null Euro kosten und bei der Verwertung Steuer in die Fiskuskassen spülen!!!

Nach Untersuchungsergebnissen des Institutes für Bodenkunde und Standortlehre (Prof. Stahr) *₉ an der Universität Stuttgart-Hohenheim, werden bei pflugwendender Ackerbewirtschaftung das 2,5- bis 3-fache an CO²-Emissionen freigesetzt wie Pflanzenrückstände je Hektar eingearbeitet werden, was bei 10t Einarbeitung ca. 25t bis 30t CO²-Emission bedeutet, die bei konsequenter Direktsaat zu wesentlichen Teilen unoxidiert versiegelt blieben. So könnten jährlich ...zig Millionen Tonnen CO²-Ausstoß kostenfrei und dazu etliche Millionen Tonnen Dieselkraftstoff und deren Emissionen reduziert werden und als bodenfruchtbarkeitssteigernder kohlenstoffspeichernder und sich Jahr um Jahr über Jahrzehnte hinweg vermehrender Dauerhumus im Boden versiegelt werden.

Im pflugwendenden- und/oder ganzflächig zinkenaufbrechenden Ackerbewirtschaftung werden bekanntlich tonnenweise CO²-Emissione je Hektar ungehindert klimaschädigend freigesetzt, die bei der ganzflächig aber zumeist auch über 6cm bis 8cm tiefergreifenden Mulchsaatbereitung, um Mähdrescherspuren und anderes zu untergreifen, sich zwar um 25% bis 35% vermindert gegenüber einer 30cm tiefwendenden/aufbrechenden Saatbettnachbearbeitung, deren durchschnittlicher Bodenkohlenstoffgehalt mit 1 % bis 2% dagegen im Dauergrünland aber mit 5% bis 6% beziffert ist, weil dort der Kohlenstoff weitaus stärker dem Luft/Sauerstoff unzugänglicher versiegelt ist, hingegen er im pflügenden Ackerbau offengelegt dem oxidativen Luft/Sauerstoff frei zugänglich dargeboten wird. Hingegen beträgt der Bodenaufbruch bei Direktsaat-Dauerbewirtschaftung in konstant durchschnittlich 4cm Korneinbettungstiefe mit in der Bodenebene 3cm breit geöffneten V-förmigen Saatrille, misst bei 3m Arbeitsbreite und max. 24 Saatreihen auf 1 m Arbeitsfahrtstrecke der Kohlenstoff oxidierenden Bodenaufbruch nur **14,5dm³** gegenüber ca. 150dm³ bei der Mulchsaat und 900dm³ beim Pflug- oder ganzflächigen Zinkenaufbruch, dessen/deren Bodenaufbruchvolumen bei der unerlässlichen Saatbettherrichtung erfahrungsgemäß sich mindestens um 25% bis 35% des teils festgefügten Pflugbalkens auf rund 1.000dm³ bis 1.200dm³ mit der rund 80- 100-fach größeren Poren- und Kohlenstoffoberfläche dem oxidativen Luftsauerstoff offenliegend vergrößert darbietet, was die bis zu 100-fach größere CO²-Emissionsausstoß-Tonagemenge gegenüber der nur 14,5dm³ Bodenaufbruchmenge und CO²-Emissionsmen bedeutet. Auf ein Hektar (= 10.000m²) ist die zitierte 3m² besäte Fläche 333mal in einem Hektar Ackerfläche enthalten, auf der heutzutage mit wenigen Ausnahmen jährlich das Mähdrusch-Häckselstroh und Grünteile mit allen verwurzelten Pflanzenteilen auf dem Acker bleibt und mehr oder weniger tief zur Verrottung eingemulcht wird, was unter mitteleuropäischen Weizenertragsverhältnissen 8t bis 10t Stroh je Hektar bedeutet, aber jedoch den im Ackerboden eingelagerte Kohlenstoffanteil laut wissenschaftlicher Kohlenstoff-Bodenuntersuchungsmessungen *₉ von 1 % bis 1,5% nicht steigert, sondern etwa nur konstant hält. Ergo wohin und wodurch verschwindet die jährlich zugeführte Kohlenstofftonnage? Nämlich durch die oxidative Luftsauerstoffzutrittöffnung an den Kohlenstoff zu CO²-klimaschädlichem Emissionsausstoß in die schon belastete und geschädigte Atmosphäre.

Die Vitalisierung des Direktsaat-Pflanzenbaues durch das erfindungsgemäß weitergebildete Universal-Säschar vermag also tatsächlich die weltweiten CO²-Emissionsausstöße entscheidend reduzieren und kann zugleich einen nahrungserzeugungsfördernden Emissions-Zertifikatehandel begründen, der aber angemessenerweise auch den Direktsaat praktizierenden Landwirten finanziell real zugute kommen muss, um raschere Ausbreitung real zu beflügeln und ein Verfahren zur CO²-Reduktion aus landwirtschaftlichem Ackerland zu begründen.

Wenn nicht nur aus betriebswirtschaftlichen/volkswirtschaftlichen Kosteneinsparungs- sondern übergeordneten Klimaschutz-CO²-Reduktionsgründen die klassische Direktsaat angestoßen und gefördert werden soll, kann nach hiesiger Überzeugung nur eine von elitären Direktsaatpraktikern, Bodenkundlern *₉ und Pflanzenbauwissenschaftlern flankierte technische Weiterbildung der aus dem Stand der Technik zufolge DE 197 30 822 C2 bzw. EP 0 891 691 B4 bekannt gewordenen Direkt-Säschare weiterführen, die jetzt darüber hinausgreifender neuheitlich dergestalt weitergebildet werden, dass sie jede vorhandene SchlepperAnbau/Aufsattel-/Anhänge-Sämaschine in eine klassische Scheibenschar-Direkt-Sämaschine mittels relativ geringen finanziellen Kosten verwandeln, die nur einen geringen Bruchteil einer bekannten klassischen Direktsaatmaschine erfordern und vielen interessierten Acker-Pflanzenbauern provokativ nahe legen wird, diese Zukunftstechnologie selber auf einem seiner Bodenproblem-Feldstücke ohne jedes Risiko in einem ihn zu nichts verpflichtenden und für den Fall, dass sein verschlissenes Säscharaggregat sowieso zu ersetzen wäre, sogar kostenneutralen "Schnuppereinstieg" auszuprobieren und sich unter Rückgriff auf die positiven Erfahrungen und Veröffentlichungen elitärer Direktsaat-Praktiker -die es ja gibt- herantasten kann, bis ihm seine gewonnenen Erkenntnisse und Ergebnisse ein "Ja" oder ein "Nein" zu seiner künftigen Acker/Pflanzenbewirtschaftung raten. Bei einem "Nein" hat er trotzdem keinen Cent fehlinvestiert, wenn er sowieso das verschlissene oder nicht mehr zeitgerecht Säscharaggregat hätte ersetzen müssen, was in neuerer Zeit für die Mulchsaat häufig genug "Alltag" ist. Er besitzt dagegen aber jetzt jedenfalls die neuzeitlichste "konventionelle" Sämaschine, die er zu etwa gleichen Kosten und bei lediglicher Ersatzbeschaffung nicht besäße, die ihm aber auch noch später jederzeit den Einstieg in die klassische Direktsaat-Technologie offen lässt, inzwischen aber sein gewohntes bisheriges Säverfahren, ob nach Pflug- und Saatbettbereitung oder Mulchsaat nicht nur uneingeschränkt, sondern sogar mit höherer Qualität praktizieren lässt und dabei meist den letzten Saatbett-Arbeitsgang einspart. Größere Zukunftssicherheit gibt es anderweitig wohl nirgends. Und unter Hinzufügung eines x-beliebigen Reihendüngerstreuers oder einer meistens vorhandenen Pflanzenschutzspritze für die Flüssigdünger-Reihen-Deponierung, z.B. NHL-Dünger, besitzt er bei einem "Ja" praktisch zum Nulltarif die neuheitlich fortschrittlich, einzigartig und auf längere Zeitdistanz vermutlich alleingestellte, gewichtleichte, wendige und schnell transportabel Heck/Front-Schlepperanbau-Klassik-Selbstfahrer-Direktsaatmaschine, die er außerdem nach Wunsch, Laune und betriebsorganisatorischem Bedarf jederzeit unter Einfügung eines dafür vorgesehenen Fahrgestells als Aufsattel- oder Anhängemaschine allzeit umrüstbereit vorfindet, die jedoch die Freiheit gewährt, die erfindungsgemäß umgerüstete Sämaschine als auch den Düngerstreuer bzw. die zur Flüssigdüngung genutzte Pflanzenschutzspritze bei Bedarf abzunehmen und jeweils "Solo" einzusetzen, was einen hoch zu schätzenden betriebswirtschaftlichen Nutzen/Kostenvorteil darstellt.

Die gegenständliche Erfindung beschränkt sich also nicht nur auf die erfindungsgemäß gestellte Säschar-Weiterbildung, sondern greift erfindungsweiterführend weit darüber hinaus und kreiert darauf aufbauend eine neuheitlich klassische Direktsaat-Selbstfahrer-Technologie-Weiterbildung mittels Nutzung seiner vorhandenen Saattechnik, wie Investitionskosten neutraler/sparender fortschrittlicher und neuheitlicher es sich selten anbietet, **außerdem aber auch ohne Umschweife konkret realisierbar ist**.

Aus der nicht vorveröffentlichten internationalen Offenlegungsschrift WO 2009/054999 A1 ist ein Säscharmodul bekannt, bei dem drehbar gelagerte Scheibenschare an einem gemeinsamen Träger quer zur Fahrtrichtung voneinander beabstandet angestellt sind. Jedem der Scheibenschare ist eine Saatgutaustragsleitung zugeordnet, die jeweils in Fahrtrichtung hinter den Scheibenscharen Saatgut in die erzeugte Saatrille ablegt. Jeweils zwei Scheibenscharen ist eine Tragrolle zur Tiefenführung der Scheibenschare zugeordnet, wobei die Tragrolle an dem gemeinsamen Träger angeordnet ist und quer zur Fahrtrichtung angestellt werden kann.

Aus der europäischen Offenlegungsschrift EP 0 521 845 A1 ist eine Sämaschine mit mehreren drehbar gelagerten Scheibenscharen bekannt. Die Scheibenschare sind jeweils kalottenförmig ausgebildet und so angeordnet, dass sie mit der konkaven Seite zur Bodenoberfläche hin gekippt sind. Jedem Scheibenschar ist eine Saatgutaustragsleitung zugeordnet, die Saatgut auf die konvexe Seite der Scheibenschare auftreffen lässt.

Aus der europäischen Patentschrift EP 0 891 691 B2 ist ein Sägerät bekannt, das mehrere drehbar gelagerte Scheibenschare aufweist, um zwei parallel zueinander angeordnete Saatgutrillen mittels jeweils eines kalottenförmigen Scheibenschares aufzuschneiden. Die Scheibenschare sind an einem gemeinsamen Träger quer zur Fahrtrichtung voneinander beabstandet, mit der konkaven Seite in Fahrtrichtung weisend quer zur

Fahrtrichtung angestellt, mit der konvexen Seite zur Bodenoberfläche hin gekippt so angeordnet, um mit der jeweils in Fahrtrichtung vorne liegenden Umfangskante eine Rollschneidwirkung zu erzeugen. Jedem Scheibenschar ist eine Saatgutaustragsleitung zugeordnet, um in Fahrtrichtung hinter der konvexen Seite der Scheibenschare Saatgut in die erzeugten Saatrillen abzulegen. In Fahrtrichtung hinter den Scheibenscharen ist eine Räumrolle angeordnet, um die Saatrillen zuzuräumen. Das der Erfindung zugrundeliegende Problem wird durch ein Säschar-Modul für die Direktsaat mit wenigstens drei drehbar gelagerten Scheibenscharen gelöst, wobei wenigstens zwei der Scheibenschare als Scheibensäschare an einem gemeinsamen Träger quer zur Fahrtrichtung voneinander beabstandet, mit der konkaven Seite in Fahrtrichtung weisend quer zur Fahrtrichtung angestellt und mit der konvexen Seite zur Bodenoberfläche hin gekippt so angeordnet sind, um mit der jeweils in Fahrtrichtung vorne liegenden Umfangskante eine Rollschneidwirkung zum Aufschneiden jeweils einer Saatrille zu erzeugen, wobei jedem der wenigstens zwei Scheibensäschare eine Saatgutaustragsleitung zugeordnet ist, die jeweils in Fahrtrichtung hinter der konvexen Seite der Scheibensäschare Saatgut in die erzeugte Saatrille ablegt, wobei das Säscharmodul weiter wenigstens eine Tragrolle zur Tiefenführung der Scheibensäschare, wobei die Tragrolle höhenverstellbar mit dem gemeinsamen Träger verbunden ist, und wenigstens eine Räumeinrichtung zum Zuräumen der Saatrillen aufweist und wobei ein drittes Scheibenschar ebenfalls mit der konkaven Seite in Fahrtrichtung weisend quer zur Fahrtrichtung angestellt ist, mit der konvexen Seite zur Bodenoberfläche hin gekippt ist und in Fahrtrichtung gesehen mittig zwischen den wenigstens zwei Scheibensäscharen so angeordnet ist, um mit der in Fahrtrichtung gesehen vorne liegenden Umfangskante eine Rollschneidwirkung zum Aufschneiden einer mittig zwischen den Saatrillen liegenden Düngerrille zu erzeugen , wobei dem dritten Scheibenschar ein Düngerrohr zugeordnet ist, das in Fahrtrichtung hinter der konvexen Seite des Scheibenschares Dünger in die ausgeschnittene Düngerrille ablegt, wobei das dritte Scheibenschar zur Erzeugung der Düngerrille an dem gemeinsamen Träger angeordnet ist, wobei die Scheibenschare kalottenförmig ausgebildet sind und wobei die Wölbung und der Anstellwinkel der Scheibenschare so aufeinander abgestimmt sind, dass mit der jeweils in Fahrtrichtung vorne liegenden Umfangskante eine Rollschneidwirkung erzielt wird.

Mit dem erfindungsgemäßen Säschar-Modul wird bei einem sehr einfachen Aufbau eine äußerst zuverlässige und erfolgreiche Direktsaat ermöglicht. Die Scheibensäschare schneiden jeweils eine Saatgutrille aus, in die das Saatgut abgelegt werden kann. Dünger wird mittig zwischen den beiden Saatgutrillen ebenfalls in einer gleich ausgebildeten Rille abgelegt. Indem die Scheibenschare so angeordnet sind, dass sie mit der vorne liegenden Umfangskante eine Rollschneidwirkung erzeugen und dadurch die Saatrillen bzw. die Düngerrillen aufschneiden, arbeitet das erfindungsgemäße Säschar-Modul auch in problematischen Böden zuverlässig und ohne Verstopfungsgefahr. Eventuell auf dem Boden aufliegende Pflanzenrückstände werden sauber durchtrennt und durch die gewählte Anordnung der Scheibenschare seitlich neben der Rille abgelegt. Es ist dadurch sichergestellt, dass das Saatgut nicht auf verrottende Pflanzenteile oder dergleichen abgelegt wird. Ein wesentlicher Vorteil des erfindungsgemäßen Säschar-Moduls ist der ungewöhnlich geringe Zugkraftbedarf und auch die Tatsache, dass sich die erfindungsgemäß vorgesehenen Scheibenschare durch ihre spezielle Anordnung selbsttätig in den Boden einziehen. Die abrollenden Scheibenschare müssen zum Erzeugen der Rillen somit nicht in den Boden hineingedrückt werden, sondern ziehen sich selbsttätig in den Boden ein und müssen lediglich mit einer Tragrolle in der gewünschten Höhe gehalten werden. Durch den geringen Zugkraftbedarf und das selbsttätige Einziehen der Scheibenschare können die erfindungsgemäßen Säschar-Module mit im Wesentlichen konventionellen Sämaschinen verwendet werden. Dadurch ergibt sich eine äußerst kostengünstige Nachrüstmöglichkeit vorhandener Gerätschaften.

In Weiterbildung der Erfindung sind die Scheibensäschare relativ zu einer die Fahrtrichtung enthaltenden und mittig zu den beiden Scheibensäscharen angeordneten Ebene in der betragsmäßig gleichen aber unterschiedlich gerichteten Winkelanordnung angeordnet.

In Weiterbildung der Erfindung ist das dritte Scheibensäschar zur Erzeugung der Düngerrille an dem gemeinsamen Träger angeordnet.

Auf diese Weise wird ein kompaktes und einfach aufgebautes Säschar-Modul geschaffen und eine exakte Ausrichtung der Scheibensäschare zur Erzeugung der Saatrillen und des Scheibenschares zur Erzeugung der Düngerrille ist erheblich vereinfacht, da alle Scheibenschare an einem gemeinsamen Träger angeordnet sind. Dieser gemeinsame Träger erleichtert auch die Höhenführung der einzelnen Scheibenschare.

In Weiterbildung der Erfindung sind die wenigstens drei Scheibensäschare relativ zu einer die Fahrtrichtung enthaltenen Ebene in der betragsmäßig gleichen Winkelanordnung angeordnet.

Da erfindungsgemäß vorgesehen ist, die Saatrillen und die Düngerrille im Wesentlichen identisch auszubilden, erleichtert die betragsmäßig gleiche Winkelanordnung der einzelnen Scheibenschare die korrekte Einstellung erheblich. Betragsmäßig gleiche Winkelanordnung bedeutet, dass die einzelnen Scheibenschare, beispielsweise die beiden Scheibensäschare, mit ihren konvexen Seiten einander zugewandt sein können oder mit ihren konkaven Seiten einander zugewandt sein können. Durch diese Anordnung wird eine erzeugte Seitenkraft in der Summe zu Null, so dass lediglich noch die vom Scheibenschar zur Erzeugung der Düngerrille erzeugte Seitenkraft abgestützt werden muss.

In Weiterbildung der Erfindung ist die wenigstens eine Tragrolle höhenverstellbar an dem gemeinsamen Träger angeordnet.

Auf diese Weise können alle Scheibenschare mittels einer einzigen Tragrolle geführt werden und durch Anbringen der Tragrolle an dem gemeinsamen Träger wird der konstruktive Aufbau erheblich vereinfacht. Die Höhenverstellbarkeit der Tragrolle erlaubt es, die Eingriffstiefe der Scheibenschare zu verstellen.

In Weiterbildung der Erfindung ist die Räumeinrichtung an dem gemeinsamen Träger angeordnet.

Die Anordnung der Räumeinrichtung an dem gemeinsamen Träger vereinfacht den konstruktiven Aufbau weiter. Die Räumeinrichtung weist vorteilhafterweise wenigstens eine schräg zur Fahrtrichtung angestellte Räumrolle auf. Die Räumrolle kann einen allgemein trapezförmigen Querschnitt und einen gezackten Außenumfang aufweisen, speziell einen pultdachförmigen Laufkranzquerschnitt. Vorteilhafterweise weist die wenigstens eine Tragrolle einen trapezförmigen Querschnitt und einen gezackten Außenumfang auf, speziell einen pultdachförmigen Laufkranzquerschnitt. Es ist weiter vorteilhaft, wenn die wenigstens eine Tragrolle gleichzeitig die Funktion der Räumeinrichtung übernimmt. Beispielsweise ist in Fahrtrichtung gesehen hinter den beiden Scheibensäscharen jeweils eine schräg zur Fahrtrichtung angestellte Räumrolle mit trapezförmigen Querschnitt und gezackten Außenumfang, speziell mit einem pultdachförmigen Laufkranzquerschnitt vorgesehen, die jeweils gleichzeitig die Funktion einer Tragrolle übernimmt. Eine solche Ausbildung führt zu einem kostengünstig realisierbaren und konstruktiv einfachen Aufbau und stellt gleichzeitig eine optimale Saat- und Düngerrillenausgestaltung sowie eine für den Saataufgang optimale Bedeckung des Saatguts sicher. Die wenigstens eine Tragrolle kann von der zur Arbeitsrichtung parallelen Ausrichtung in eine schräge Ausrichtung umstellbar sein, um eine Räumwirkung zu erzeugen. Bei geringer Pflanzenmasseauflage könnten anstelle der Räumrollen eventuell auch entsprechend geformte Schlepp-Räumzinken angeordnet sein bzw. werden.

In Weiterbildung der Erfindung ist der gemeinsame Träger mittels einer Parallelogramm-Gelenkanordnung oder mittels einer Blattfeder mit einer Zugeinrichtung verbunden. Die Blattfeder kann um ihren Befestigungspunkt an der Zugeinrichtung spiralförmig gewunden sein. Die Blattfeder kann alleine oder zusammen mit einem Gelenkträger die Verbindung mit der Zugeinrichtung herstellen, wobei dann beispielsweise die Blattfeder einen Gelenkträger einer Parallelogrammanordnung ersetzt. Die Blattfeder kann um ihre Befestigungsbasis spiralförmig gewunden oder ungewunden, d.h. glatt gestreckt ausgebildet sein und einen mehreckigen oder runden Materialquerschnitt haben.

Mittels einer Parallelogramm-Gelenkanordnung ist eine exakte Höhenführung des Säschar-Moduls möglich. Kostengünstiger aber für geringere Ansprüche ebenfalls ausreichend ist eine Führung mittels einer Blattfeder oder mittels nur eines Gelenkträgers und einer Blattfeder.

In Weiterbildung der Erfindung sind die Scheibenschare kalottenförmig ausgebildet und haben ein Verhältnis von Bombierungstiefe zu Scheibendurchmesser von 1:20 bis 1:50 und eine Scheibendicke von unter 5 mm.

Solche, insbesondere kugelkalottenförmig ausgebildete, fläche Scheiben haben zum einen eine sehr gute Rollschneidwirkung und zugleich zuverlässige Selbstreinigungskraft und verursachen auf der anderen Seite nur einen vergleichsweise geringen Zugkraftbedarf. Gleichzeitig sind solche kalottenförmigen, flachen Scheiben sehr stabil. Beispielsweise ist bei einem Scheibendurchmesser von 330mm eine Bombierungstiefe von 13,5mm vorgesehen. Mit einer solchen Scheibe lässt sich eine etwa V-förmige Saatgut- oder Düngerrille zuverlässig auch in unterschiedlichsten Böden und mit geringem Zugkraftbedarf ausheben.

In Weiterbildung der Erfindung sind die Wölbung und der Anstellwinkel der Scheibenschare so aufeinander abgestimmt, dass bei dem in Eingriff mit dem Boden befindlichen Scheibenschar auf Höhe der Bodenoberfläche an der vorderen Umfangskante eine auf der konvexen Seite liegende Schneidenfläche oder ein sich an die vordere Umfangskante anschließender, auf der konvexen Seite liegender Bereich parallel zur Fahrtrichtung angeordnet ist.

Auf diese Weise wird auf Höhe der Bodenoberfläche die vordere Umfangskante oder die dort angeordnete Schneide des Scheibenschares parallel zur Fahrtrichtung geführt. Auf Höhe der Bodenoberfläche ergibt sich dadurch eine optimale Rollschneidwirkung, da auf Höhe der Bodenoberfläche keine quer zur Fahrtrichtung liegende Bewegungskomponente vorhanden ist. Etwaige auf der Bodenoberfläche liegende Pflanzenteile werden dadurch zuverlässig durchgeschnitten und es ist dadurch zuverlässig vermieden, dass Stroh oder Pflanzenteile in die Saatgutrille eingedrückt werden und dort den Aufgang der Saat behindern.

In Weiterbildung der Erfindung liegt ein Anstellwinkel zur Fahrtrichtung zwischen 7° und 20°, insbesondere bei 19°.

Je nach gewünschter Breite der Fahrtrille und nach der Bombierungstiefe der verwendeten Scheibe kann der Anstellwinkel eingestellt werden. Die erforderliche Rillenbreite und damit der Anstellwinkel hängen selbstverständlich auch von der Bodenbeschaffenheit und der zur Verfügung stehenden Zugkraft ab.

In Weiterbildung der Erfindung sind die Wölbung und ein Anstellwinkel der Scheibenschare so aufeinander abgestimmt, dass bei einer Eingriffstiefe von 4cm eine Saatgutrille mit einer Breite auf Bodenhöhe von 2,5cm bis 3cm geöffnet wird.

Es hat sich herausgestellt, dass eine solche Breite der Saatgutrille optimale Bedingungen für den Saataufgang liefert und gleichzeitig noch mit geringem Zugkraftbedarf aufgeschnitten werden kann. Die Saatablage erfolgt direkt auf den geöffneten Kapillaren und es ist unter allen Bedingungen ein optimal sicherer, kraftvoller und frohwüchsiger Saataufgang garantiert.

In Weiterbildung der Erfindung sind die jeweils tiefsten Punkte der Scheibensäschare quer zur Fahrtrichtung 12,5cm beabstandet, um zwei in Abstand von 12,5cm nebeneinander liegende Saatgutrillen zu erzeugen.

Ein solcher geringer Abstand der Saatgutrillen führt zusammen mit der mittig zwischen diesen beiden Saatgutrillen angeordneten Düngerrille nicht nur zu einem raschen und guten Saataufgang, sondern durch eine von den beiderseitig nahebei gelegten Startdüngergaben, die von Saataufgang an sofort erreichbar und nutzbar sind, auch von Anfang an zu kräftigen, gesunden, frohwüchsigen und ertragreichen Pflanzenbeständen. Da erfindungsgemäß die Scheibenschare zur Erzeugung der Saatgutrillen und der Düngerrille an einem gemeinsamen Träger angeordnet sind, können auch solchermaßen sehr eng beieinander liegende Saatgutrillen zuverlässig, verstopfungsfrei und mit geringen Toleranzen gezogen werden. Der Abstand der einzelnen Säschar-Module untereinander, der dann den Abstand von jeweils zwei Saatgutrillen mit mittig angeordneter Düngerrille zum nächsten Block mit zwei Saatgutrillen und mittig angeordneter Düngerrille definiert, kann dahingegen je nach Wunsch des Landwirts gewählt werden, um beispielsweise eine sogenannte Lichtschachtpflanzung zu erreichen. Um diesen Abstand zwischen den einzelnen Säschar-Modulen einstellen zu können, müssen diese lediglich mit ihrer Befestigung an einem quer zur Fahrtrichtung verlaufenden Zugbalken versetzt werden. Das erfindungsgemäße Säschar-Modul ist dadurch in äußerst flexibler Weise einzusetzen.

Das der Erfindung zugrundeliegende Problem wird auch durch eine Direktsaat-Maschinenkombination gelöst, mit einer konventionellen, zum Anbau oder zur Ankoppelung an einen Ackerschlepper vorgesehenen Sämaschine, deren Säschare entfernt sind, sowie mit wenigstens einem erfindungsgemäßen Säschar-Modul, bei der das wenigstens eine Säschar-Modul in Fahrtrichtung hinten an den Ackerschlepper oder die Sämaschine angebaut ist und bei der wenigstens eine Saatgutleitung von der Sämaschine zum Säschar-Modul, wenigstens eine konventionelle Flüssigdüngerspritze oder ein konventioneller Reihendüngerstreuer und wenigstens eine Düngerleitung von der/dem Flüssigdüngerspritze/Reihendüngerstreuer zu dem Särscharmodul vorgesehen ist.

Im Rahmen der Erfindung kann die in jedem Ackerbaubetrieb vorhandene Pflanzenschutzspritze mit mindestens einer Zuleitung an das die Düngerrille öffnende Säschar des Säscharmoduls herangezogen und integriert werden, beispielsweise indem ein Flüssigdüngertank, eine Dosier- und Pumpeinrichtung an der Front eines Ackerschleppers angeordnet werden, wobei eine Spritzzuleitung in die Düngerrille vorgesehen ist. Auf diese Weise kann mittels der vorhandenen Technikausrüstung, also Pflanzenschutzspritze als Flüssigdüngermodul, Ackerschlepper sowie konventionelle Saatmaschine ein Direktsaat-Maschinenkombination geschaffen werden, wobei außer den Säscharmodulen und einem Maschinenadapter keine nennenswerten Investitionskostenaufwendungen weiter anfallen. Dadurch gelingt nicht nur die erstrebenswerte klassische Direktsaat vollgültig, wie sie qualitativ besser und perfekter nicht einmal die sogenannte "Cross-Slot-Verfahrenstechnik" es darzubieten vermag.

Dies noch unberücksichtigt der Investitions- und Betriebskostenvorteile der vorliegenden Erfindung. Es kann vielmehr ohne großen Aufwand eine völlig neue und bisher unbekannte neuartige "Schlepper-Selbstfahrer-Direktsaat-Technik-Kombination" geschaffen werden, die dem Klimaschutz kostenneutraler und kostenfreier Rechnung trägt, wie kaum eine andere Klimaschutzmaßnahme es vermag. Gerechterweise müsste dies dem Direktsaat-Ackerbau-Landwirt vom Gesetzgeber durch handelsfähige CO₂-Zertifikate honoriert werden. Dies unter dem Eindruck, dass allein in der Bundesrepublik Deutschland ein Ackerbauflächenpotential von rund zwölf Millionen Hektar auf die Direktsaatbewirtschaftung wartet. Bei nachhaltiger Verwirklichung könnten letztendlich zufolge einer Bodennutzungsanalyse *10 jährlich und pro Hektar gegenüber der Pflugbewirtschaftung 8,9 t Kohlenstoffeinlagerung in den Boden klimaschonend und zugleich signifkant kostenreduzierend bewirkt werden. Dies hieße gegenüber der Pflugbewirtschaftung Jahr für Jahr viele Jahrzehnte lang über 100 Mio t Kohlenstoff (C), d.h. jährlich über 300 Mio t CO₂ Vermeidung. Politik und Parlament müssen es nur wollen und fördern.

Mit der Erfindung wird dadurch eine unter Verwendung vorhandener Landmaschinenkomponenten aufbaubare Direktsaat-Maschinenkombination geschaffen. Der Kostenaufwand zur Realisierung einer solchen Direktsaat-Maschinenkombination ist dadurch äußerst gering, da eine vorhandene Sämaschine integriert werden kann. Benötigt werden also lediglich die gewünschte Anzahl an Säschar-Modulen. Die Speicherung des Saatguts und dessen Transport durch eine Saatgutleitung zum Säschar-Modul wird hingegen von der bereits vorhandenen Sämaschine übernommen. Aufgrund des geringen Zugkraftbedarfs der erfindungsgemäßen Säschar-Module kann mittels eines herkömmlichen Ackerschleppers eine Direktsaat-Maschinenkombination realisiert werden. Es wird einem Landwirt dadurch ermöglicht, mit äußerst geringem Kostenaufwand eine Direktsaat-Maschinenkombination zu realisieren.

In Weiterbildung der Erfindung ist ein an und für sich konventioneller Reihendüngerstreuer vorgesehen, dessen Düngerstreuvorrichtung entfernt oder stillgelegt ist, wobei wenigstens eine Düngerleitung von dem Reihendüngerstreuer zu dem Säschar-Modul vorgesehen ist.

Durch Verwendung eines an und für sich konventionellen Reihendüngerstreuers wird der Kostenaufwand zur Realisierung der erfindungsgemäßen Direktsaat-Maschinenkombination weiter reduziert.

Alternativ kann eine an und für sich konventionelle Flüssigdüngerspritze anstelle des Reihendüngerstreuers eingesetzt werden, wobei diese Flüssigdüngerspritze beispielsweise eine konventionelle Pflanzenschutzspritze sein kann. Von einem Flüssigdüngertank und einer Flüssigdüngerpumpe wird eine Düngerleitung bis auf die konvexe Rückseite des die Düngerrille öffnenden Scheibenschares gelegt. Auch durch die Verwendung einer an und für sich konventionellen Flüssigdüngerspritze wird der Kostenaufwand zur Realisierung der erfindungsgemäßen Direktsaat-Maschinenkombination weiter reduziert.

Die Sämaschine und der Reihendüngerstreuer, Flüssigdüngerspritze können dabei entweder vor oder hinter dem Ackerschlepper angeordnet werden. Eine Saatgutleitung bzw. eine Düngerleitung kann dann entlang dem Ackerschlepper bis zu dem hinter dem Ackerschlepper angeordneten Säschar-Modul geführt werden. Es ist insbesondere vorteilhaft, die Sämaschine mit den Säscharmodulen am Heck und den Reihendüngerstreuer oder die Flüssigdüngerspritze an der Front eines Ackerschleppers anzubauen.

In Weiterbildung der Erfindung ist das wenigstens eine Säscharmodul an einem quer zur Fahrtrichtung vorgesehenen Zugbalken der Sämaschine angebaut und quer zur Fahrtrichtung entlang dem Zugbalken verschiebbar angeordnet.

Die Abstände zwischen den einzelnen Säscharmodulen können dadurch vom Landwirt selbst problemlos und schnell verändert werden. Dadurch kann beispielsweise eine sogenannte Lichtschachttechnik realisiert werden, bei den zwischen jeweils zwei Saatrillen mit mittig angeordneter Düngerrille ein größerer Abstand liegt, bis wieder die nächsten zwei Saatrillen mit mittig angeordneter Düngerrille folgen.

In Weiterbildung der Erfindung ist ein an einen Ackerschlepper anhängbares oder aufsattelbares Fahrgestell mit wenigstens einer Tragräderachse vorgesehen, wobei auf dem Fahrgestell wenigstens ein Saatguttank und/oder ein Düngertank angeordnet ist und wobei das wenigstens eine Säschar-Modul an das Fahrgestell bzw. an die Sämaschine angekoppelt ist.

Auf diese Weise muss das Gewicht des Saatguttanks und/oder des Düngertanks sowie der Säschar-Module, wenn sich diese im angehobenen Zustand befinden, nicht vom Ackerschlepper aufgenommen werden, sondern kann über die Tragräderachse abgeleitet werden. Vorteilhaft ist dabei eine geringere Bodenbelastung durch größere Aufstandsfläche und auch die Möglichkeit, die erfindungsgemäße Direktsaat-Maschinenkombination schnell und problemlos auch über öffentliche Straßen von einer Ackerfläche zur nächsten zu bewegen.

In Weiterbildung der Erfindung sind die Sämaschine und/oder die Pflanzenschutz-/Düngerspritze bzw. der Reihendüngerstreuer an oder auf dem Fahrgestell angeordnet und das Fahrgestell weist eine Anhebevorrichtung zum Abheben des wenigstens eines Säschar-Moduls von der Bodenoberfläche auf.

Indem damit das wenigstens eine Säschar-Modul von der zu bearbeitenden Ackerfläche abgehoben werden kann, ist ein Transport der erfindungsgemäßen Direktsaat-Maschinenkombination von einer Ackerfläche zur anderen erheblich erleichtert und ein solcher Transport kann insbesondere erfolgen, ohne dass ein Fahrer des Ackerschleppers aussteigen muss. Die Anhebevorrichtung für das Säschar-Modul kann dabei jedoch kostengünstig ausgebildet werden, da ja lediglich die Säschar-Module abgehoben werden müssen.

In Weiterbildung der Erfindung weist die Anhebevorrichtung eine Fahrgestellhebeeinrichtung zum Anheben des Fahrgestells relativ zur wenigstens einen Tragräderachse und/oder eine Säschar-Modul-Hebeeinrichtung zum Anheben wenigstens des oder der Säschar-Module relativ zum Fahrgestell auf.

Durch eine Fahrgestellhebeeinrichtung wird die erfindungsgemäße Direktsaat-Maschinenkombination noch flexibler einsetzbar. Beispielsweise kann das Fahrgestell in einer ersten, abgesenkten Stellung für die Bodenbearbeitung verwendet werden und in einer zweiten, angehobenen Stellung für den Transport über Straßen oder Felder. Durch Kombination zweier Anhebevorrichtungen können die Anhebevorrichtungen jeweils kostengünstiger ausgeführt werden, da nur ein geringer Hubweg erforderlich ist. Für den Straßentransport können dann beispielsweise sowohl das Säschar relativ zum Fahrgestell als auch das Fahrgestell relativ zur Tragräderachse angehoben werden, um eine ausreichende Bodenfreiheit zu erreichen.

Durch die Erfindung wird auch ein Direktsaatverfahren mit wenigstens einem erfindungsgemäßen Säscharmodul bereitgestellt, bei dem folgende Schritte vorgesehen sind:
Aufschneiden von zwei parallel zueinander angeordneten Saatgutrillen mittels jeweils eines kalottenförmigen Scheibensäschares, wobei die Scheibensäschare an einem gemeinsamen Träger quer zur Fahrtrichtung voneinander beabstandet, mit der konkaven Seite in Fahrtrichtung weisend quer zur Fahrtrichtung angestellt, mit der konvexen Seite zur Bodenoberfläche hin gekippt so angeordnet sind, um mit der jeweils in Fahrtrichtung vorne liegenden Umfangskante eine Rollschneidwirkung zu erzeugen,
Ablegen von Saatgut in die erzeugten Saatrillen mittels einer Saatgutaustragsleitung in Fahrtrichtung hinter der konvexen Seite der Scheibensäschare,
Zuräumen der Saatrillen mittels wenigstens einer Räumeinrichtung ,
Aufschneiden einer mittig zwischen den Saatrillen liegenden Düngerrille mittels eines kalottenförmigen Scheibenschares, wobei das Scheibenschar mit der konkaven Seite in Fahrtrichtung weisend quer zur Fahrtrichtung angestellt, mit der konvexen Seite zur Bodenoberfläche hin gekippt und in Fahrtrichtung gesehen mittig zwischen den zwei Scheibensäscharen angeordnet ist, um mit der in Fahrtrichtung vorne liegenden Umfangskante eine Rollschneidwirkung zu erzeugen und
Ablegen von Dünger in die erzeugte Düngerrille mittels eines Düngerrohres in Fahrtrichtung hinter der konvexen Seite des Scheibenschäres.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen, dargestellten Ausführungsformen können dabei in beliebiger Weise miteinander kombiniert werden, ohne den Rahmen der Erfindung zu überschreiten.

In den Zeichnungen zeigen:
- Fig. 1: eine Seitenansicht eines erfindungsgemäßen Säschar-Moduls gemäß einer ersten Ausführungsform der Erfindung,
- Fig. 1.1: eine Seitenansicht eines erfindungsgemäßen Säschar-Moduls gemäß einer zweiten Ausführungsform der Erfindung,
- Fig. 2: eine schematische Draufsicht auf das Säschar-Modul der Fig. 1,
- Fig. 2.1: eine Anordnung von zwei nebeneinander angeordneten erfindungsgemäßen Säschar-Modulen in der Draufsicht, wobei eine nachlaufende Räumrolle jeweils der Übersichtlichkeit halber nicht dargestellt ist,
- Fig. 2.2: eine schematische Draufsicht einer Anordnung von insgesamt vier erfindungsgemäßen Säschar-Modulen,
- Fig. 3: eine Ansicht des Säschar-Moduls der Fig. 2 von hinten, wobei zur Verdeutlichung der Stellung der Scheibenschare Einzelteile des Säschar-Moduls nicht dargestellt sind,
- Fig. 4: eine Seitenansicht einer erfindungsgemäßen Direktsaat-Maschinenkombination,
- Fig. 5: eine Seitenansicht einer erfindungsgemäßen Direktsaat-Maschinenkombination gemäß einer weiteren Ausführungsform der Erfindung und
- Fig. 6: eine schematische Draufsicht auf ein erfindungsgemäßes Säschar-Modul gemäß einer weiteren Ausführungsform der Erfindung.

Die Erfindung ist anhand der Zeichnungen eines Ausführungsbeispieles figürlich dargestellt und im folgenden beschrieben und mit Bezugsnummern/-zeichen erläutert.

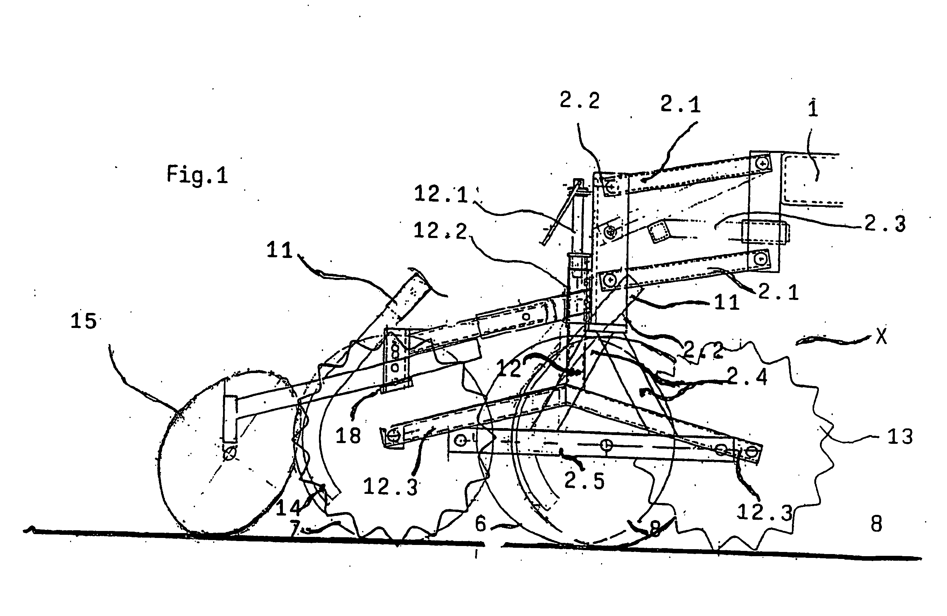

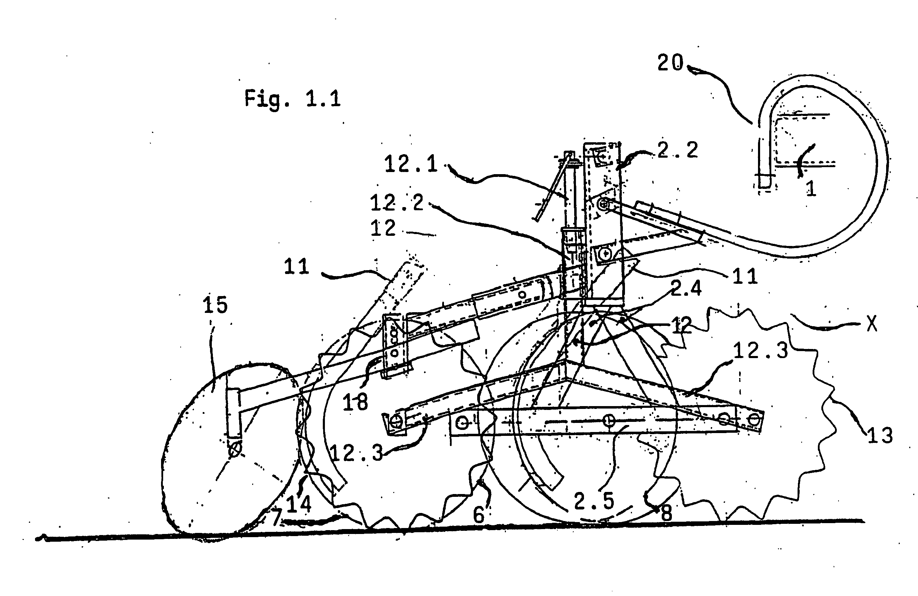

In Figur 1 sind in Seitenansicht und Arbeitsrichtung nach rechts (Pfeil 0) in einem von mehreren alleingestellten Direkt-Säschar-Modul X (mindestens 3) aus DE 197 30 822 C2 bzw. aus EP 0 891 691 B2 erfindungsgemäß weitergebildete Scheibensäschare (6, 7, 8) und ihnen an/zugeordnet je eine Saataustragleitung (9, 10, 11) und zur Säschar-Tiefenführung vorzugsweise (3) im Teleskop (12-12,5) vertikal zentral verstellbare Tragrollen (13, 14, 15) angeordnet, wovon die Tragrolle (15) von der zur Arbeitsrichtung parallel einstellbaren Laufrichtung in Diagonalrichtung umstellbar ist, um den vom Düngerschar (8) über die Düngerrille bewusst gebildeten Erd-/Pflanzenmulchdamm einzuebnen wenn es witterungsbedingt geboten erscheint, oder andernfalls im Geradeauslauf z. B. bei Starkregen-Aussicht den Damm zu stabilisieren um eine vorzeitige Düngerauflösung und -versickerung mindestens zu verzögern. Vorteilhafterweise ist mindestens die Tragrolle (15) mit einem gezackten Laufkranz versehen, der das Einebnungs-/Streubild sehr verbessert. Das Direkt-Säschar-Modul X ist mittels eines Parallelogramms 2.1, 2.2 mit einem Zugbalken 1 verbunden und die Säschare 6, 7, 8 sind an einem Träger 2.4, 2.5 angeordnet.

Figur 1 und Figur 1.1 zeigen in Seitenansicht das Säscharmodul X, das auf einem zur Arbeitsrichtung quer und etwa parallel zur Bodenebene horizontal gelegten Zentral-Zugbalken (1) in/an jeweils 1 (einem) einfachst, aber besonders seitenstabilisierten Parallelogramm (2-2,5, siehe Fig. 1) oder einem Querschnitt-mehreckigen Federelement 20, siehe Fig. 1.1, das an seiner oder um seine Befestigungsbasis (1) spiralförmig gewunden ist in doppeltem Samenreihenabstand (a-b) zu mehreren und die Sämaschinen-Arbeitsbreite übergreifenden Scharbalken (1) angeordnet ist und das alleingestellt ein in sich geschlossenes die klassische Direktsaat real verwirklichendes Säschar-Modulaggregat ist, das zu mehreren auf einer Zugschiene angeordnet und anstelle deren herkömmlichen Säscharaggregate ausgewechselt, jede vorhandene Schlepperanbau/Aufsattel/Anhänge-Sämaschine zur universellen "Megasaat-Maschine" neuheitlich umwandelt, was nicht nur zigtausendfache Sämaschinen-Gebrauchswertzuwächse realisiert, sondern betriebs- und volkswirtschaftlichen geldwerten Nutzen begründet und bewirkt, außerdem den Wiederverkaufswert der aufgewerteten Sämaschine erheblich steigert.

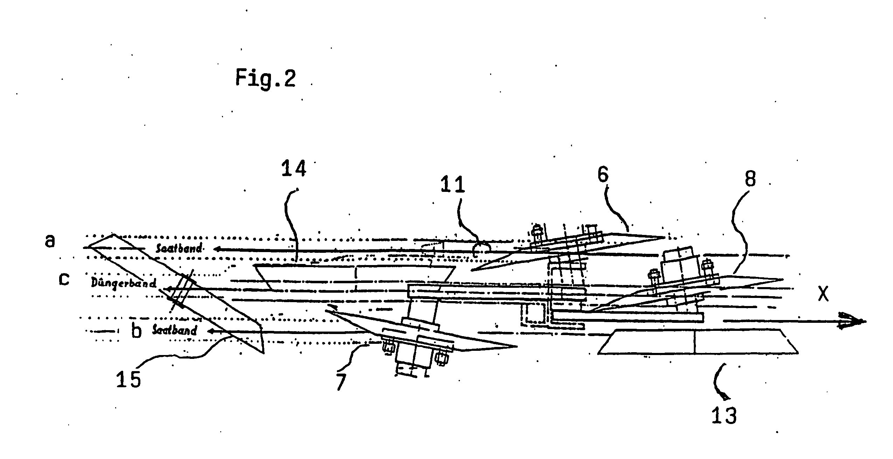

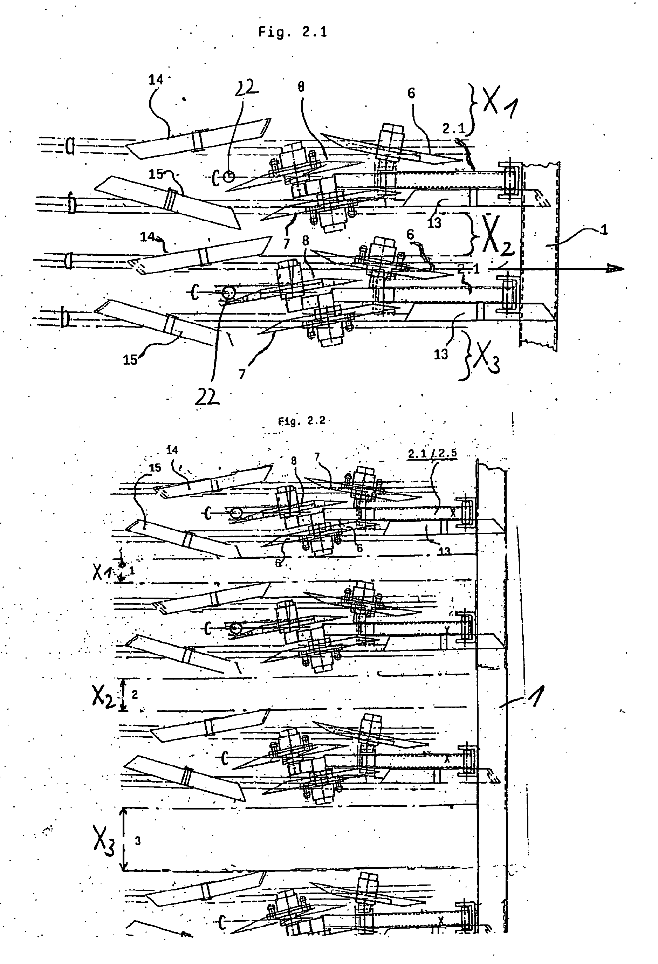

Figur 2 zeigt in Draufsicht das alleingestellte Direkt-Säschar-Modul X der Figur 1 und der Figur 1.1 mit den gleichen Bezugszeichen und legt die wesenhafte, erfindungsgemäße Direkt-Säschar-Weiterbildung weiter offen. Die die beiden Samenkörnerreihen (a) und (b) aushebenden Säschare (6 und 7) der Saatmodule (X) sind in Arbeitsrichtung hintereinander versetzt und gegeneinander diagonal geöffnet und gleichzeitig aus der Vertikalen mit ihrer konvexen Scheibenscharaußenseite zur Bodenebene gekippt, jeweils zwischen 7° und 19° angeordnet und etwa mittig zwischen ihnen mit denselben Anstell- und Kippwinkelgraden das Düngerschar (8) für die Düngersaatrille (c), die von beiden Seiten von den jeweils nachgeordneten Scharen (6 und 7) mit deren Saatrillenaushub versiegelt und von der mehr oder weniger stark diagonal anstellbaren Rotations-Striegelrolle (15) ganz oder teilweise luftig locker gekrümelt die Saatreihen wieder abdeckt und schließt. Gemäß Fig. 2 sind die Scheibenschare 6, 8 mit ihrer konkaven Scharseite gegen die konkave Scharseite des Schares 7 angestellt, so dass der Saatrillenaushub der Schare 6, 7 mittig die befüllte Düngerrille c abdeckt.

In Figur 2.1 ist gezeigt, dass die Säschare (6 und 7) in Arbeitsrichtung V-förmig offen sind und mit ihrer konvexen Scheibenseite zueinander angeordnet und zugleich diagonal angestellt und zum Boden hin gekippt sind. Analog zu Schar 7 ist Schar 8 gestellt, das eine Düngerrille aushebt. Der Aushub der Säschare 6, 7, die jeweils eine Saatrille ausheben, wird außerhalb, also rechts bzw. links in Fahrtrichtung gesehen, des Säscharmoduls X in die Lichtschachtreihen X1, X2, X3, abgelegt, was für ein hohes Sätempo über 8 km/h oder 10 km/h voraussichtlich die bevorzugte Säschareinstellung sein wird. Die Schare 6, 7 zentrieren sich gegenseitig in Geradeausrichtung ohne irgendeinen Seitendruck nach der einen oder der anderen Richtung. Sie verkrallen sich gegenseitig regelrecht selbst in Makadam-artig mit Schotterstein durchsetzten festgelagertem Problemboden, wie ein unfreiwilliger, versehentlicher "Versuch" von ca. 20m Länge auf einem so rollierten Gutshof vor einer größeren Besuchergruppe "eindrucksvoll" mit ca. 3cm Rillentiefe ohne Scheibenscharschaden passierte, was sich später in ähnlichen und tonhaltigen Problemböden stets bestätigte. Außerdem vertragen sie ein hohes Sätempo ohne gegenseitige Bodenwurfblockade. Der Scharrillenaushub der Schare 6, 7 wird außerhalb des Scharmoduls X neben den geöffneten Saatrillen a, b in die unbelegte Lichtschachtreihe X1, X2, X3 abgelegt. Diese Anordnung der Schare 6, 7 ist für ein hohes Saattempo von über 8 km/h oder 10 km/h die bevorzugte Scharstellung.

Die Figur 2.2 zeigt vier erfindungsgemäße Säscharmodule (X) die von jedem Benutzer zu jeder Zeit von der Standard-Engreihensaat von 12,5cm umstellbar sind auf eine beliebig weite "Lichtschacht"-Doppelreihensaat. Er braucht lediglich nur die einzelnen Scharmodule X auf dem Zugbalken (1) axial weiter auseinanderrücken, behält aber die Möglichkeit und ungeschmälerte Freiheit und Freizügigkeit der Rück- oder Ummontage. Möglicherweise gewinnt das Lichtschaftverfahren Freunde größerer Anzahl. Die Lichtschachtbänder X₁, X₂, X₃ können verschieden weit eingestellt werden, z.B. auf reifenbreite Spurlichtschächte bis unter 10 cm Breite. In jedem Fall ist die Breite der Lichtschächte X₁, X₂, X₃ einstellbar.

Derjenige, d. h. jeder Nutzer der hier offenbarten Direktsaat-Technologie kann einer Lichtschacht-Saattechnik uneingeschränkt und kostenfrei folgen, was technische Zukunfts- und Planungssicherheit auf unbegrenzte Zeit offen hält. Darüber hinaus eröffnet jedes Direktsäscharmodul X einzeln genutzt und mit bekannten Schub- und/oder Zuganschlussteilen adaptiert als Gewächshaus/Pflanzenzucht/Kleinparzellen-Sägerät oder in Entwicklungsländern interessante Anwendungsperspektiven.

Zumindest die beiden Säschare (6 und 7) die die Saatreihen (a, b) öffnen, können natürlich aus ihren zur Arbeitsrichtung diagonalen Anstellwinkelanstellung von 7° bis 19° einander **zu arbeitenden Stellung** der (Figur 2.1) mit Beibehalt der gleichen Winkelgrade vertikal um 180° gedreht (Figur 1.1), angeordnet sein, sodass ihr Saatrillen-Aushub auf den Modulrillen-Außen-Ränder bis nach dem Sameneintrag deponiert ist. Die Baulängen-Ausladung nach hinten ist dadurch vorteilhaft kürzer gestaltbar.

Durch die Anordnung der Säschare (6,7, 8) zueinander und ihren gemeinsam übereinstimmend gegebenen Diagonal-Anstell- und Kippwinkelgeraden aus der Vertikalen zum Boden hin jeweils zwischen 7° und 19° steht der vordere Schneidrand aller drei Säscheiben-Schare gemeinsam annähernd parallel zur Arbeitsrichtung im Bodeneingriff und trennen deshalb wie ein Skalpell im leichtzügigsten Rollschnitt die ihnen zugewiesenen Saatrillen (a, b, c) ohne Bodenverpatzungen auf, durchtrennen mit Leichtigkeit im rollenden Schnitt die lose aufliegenden und verwurzelten Pflanzenteile und heben fast konturscharf aber porös geschnittene in Bodenebene ca. 2,5cm-4cm breite, v-förmige Saatrillen auch bei Feuchtboden krümelig aufbrechend den gesamten Rillenquerschnitt sauber aus und legen den Inhalt gut vermischt seitlich neben der Rille ab, so dass die Samen wie Dünger direkt auf den Kapillar-offenen Saatrillengrund mit Keimwasserkontakt liegen, ehe sofort dahinter angeordnete Rotations-Striegelrollen (15) die Saatreihen luftig locker gekrümelt wieder abdecken und schließen. Für rasche und nachhaltende Erwärmung, mit unmittelbarem Startdünger-Zugriff, kraftvollen und lückenlosen Saataufgang mit frohwüchsigem Weiterwuchs bis zur Reife und für mindestens "pflug-gleichen" Ernteertrag sind somit die bestmöglichen Voraussetzungen erfüllt und real gegeben, zumal unter den Samenkörnern und Dünger kein Hälmchen Stroh zu finden ist im Gegensatz zu den allermeisten echten und auch nur so sogenannten "Scheiben-Direktsämaschinen" deren Säschare Zähstroh zuhauf in die Saatrille eindrücken, weil bei allen mittleren und leichteren Böden die feste Gegenschneide fehlt.

Letzten Endes begründen und realisieren die erfindungsgemäß weitergebildeten und in einem erfindungsgemäß autonomen Säscharmodul (X) integrierten Direktsäschare (6, 7, 8) erst die gegenständlich klassisch neuheitliche Direktsaattechnologie.

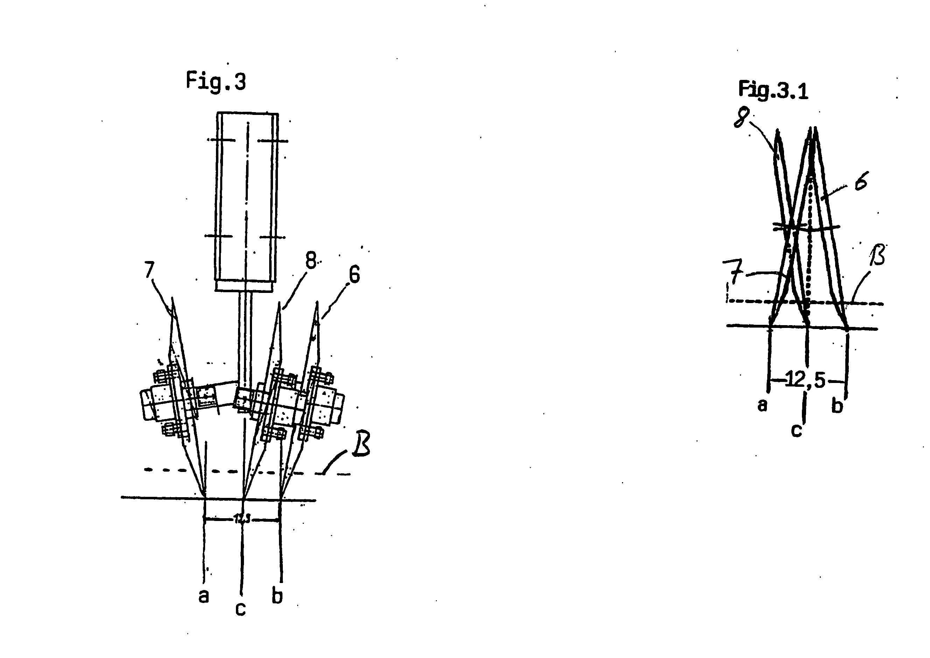

Figur 3 und Fig. 3.1 zeigen in Ansicht von hinten die die beiden Saatrillen (a und b) aushebenden Säschare (6 und 7) und etwa mittig dazwischen das die Düngerrille (c) aushebende Säschar (8) und auf der Saatebene das extrem enge Kornreihenabstandmaß von 12,5cm, das bei klassisch echten Direkt-Sämaschinen ein Novum darstellt und dass trotzdem sich keine der drei Säschare gegenseitig stört oder behindert. Eine Bodenoberfläche ist gestrichelt dargestellt und mit B bezeichnet. Gemäß Fig. 3 legen die beiden Säschare 6, 7 den Saatrillenaushub aus den Saatrillen a, b in Richtung der Mitte des Säscharmoduls bzw. in Richtung der düngerbelegten Düngerrille c ab. Die Saatrillen a, b werden mittels der Räumrollen wieder geschlossen.

Gemäß Fig. 3.1 sind die beiden Säschare 6, 7 zum Ausheben der Saatgutrillen a, b mit ihren konvexen Scharseiten zueinander gerichtet und legen den Saatrillenaushub beiderseits in den jeweils angrenzenden Lichtschacht hinein ab. Die Mittellinien der Saatrillen a, b sind 12,5 cm voneinander beabstandet, mittig zu den beiden Saatrillen a, b, wird die Düngerrille c durch das Scheibenschar 8 ausgehoben. Die Scheibenschare 6, 7, 8 sind jeweils kugelkalottenförmig ausgebildet und gemäß der in Fig. 2.2 gezeigten Anordnung ausgerichtet, dass also die Scheibenschare 6, 7, 8 jeweils quer zur Fahrtrichtung angestellt und gleichzeitig mit ihrer konvexen Seite zur Bodenebene hin gekippt sind, jeweils um einen Winkel zwischen 7° bis 19°. Die Anordnung und die Anstellwinkel sowie Kippwinkel der Scheibenschare 6, 7, 8 sind so auf die Bombierung der kugelkalottenförmigen Scheibenschare, 6, 7, 8 abgestimmt, dass auf Höhe der Bodenoberfläche B eine vordere Umfangskante der Scheibenschare 6, 7, 8 jeweils parallel zur Fahrtrichtung liegt. Beispielsweise weisen die Scheibenschare 6, 7, 8 eine umlaufende Schneide auf und die Scheibenschare 6, 7, 8 sind dann so ausgerichtet, dass die auf der konvexen Seite liegende Schneidenfläche auf Höhe der Bodenoberfläche parallel zur Fahrtrichtung ausgerichtet ist.

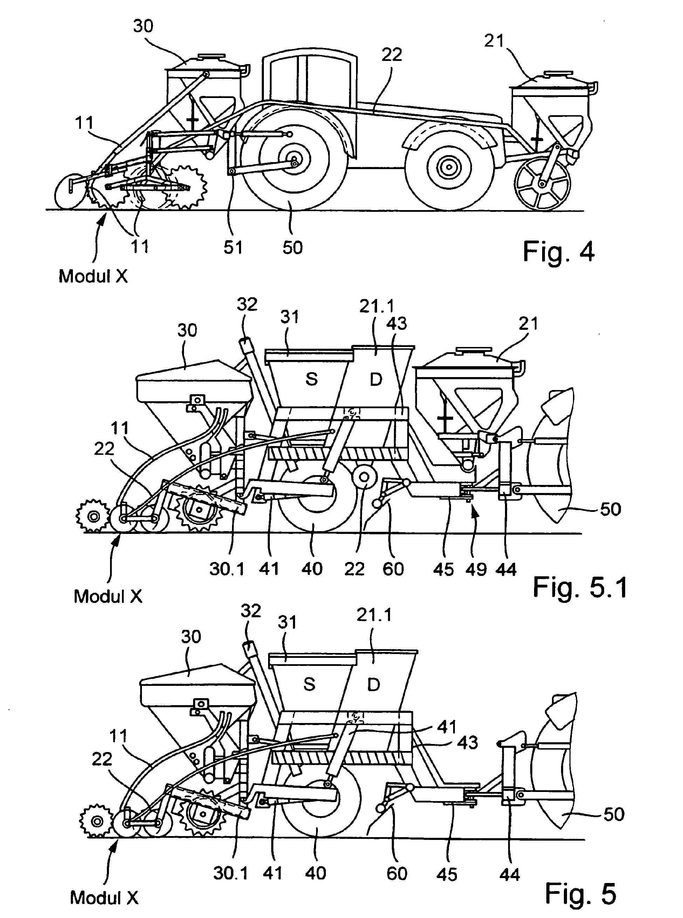

Figur 4 zeigt in Seitenansicht und Arbeitsfahrt nach rechts, eine zufolge Figur 1 auf, das heißt umgerüstete Sämaschine (30), angebaut an der Heck-Hebeeinrichtung eines Schleppers und an dessen Front einen Reihendüngerstreuer (21) bekannter Bauart und Funktion entsprechend den zu versorgenden zwölf Düngerreihen auf 3m Breite mit 24 Saatreihen mit den nach hinten führenden Düngerschlauchpaket (22) womit nach hiesiger Kenntnis erstmalig und neuheitlich eine klassisch echte Selbstfahrer-Direkt-Sämaschine unter Integration und Verwendung vorhandener Maschinentechnik hergestellt ist.

Fig. 4 zeigt die Realisierung einer erfindungsgemäßen Direktsaat-Maschinenkombination mit einem standardmäßigen Mittelklasseschlepper, wobei der Sämaschinenteil 30 mit mindestens einem daran angeordneten Säscharmodul X mit der Saatkornaustragsleitung 11 sowie der Düngeraustragsleitung 22 lösbar an der Heck-Hebeeinrichtung 51 des Schleppers 50 befestigt ist. Eine Flüssigdüngerspritze 21 mit dem vorderen Abschnitt der Düngerzuleitung 22 ist an einer Schlepperfront-Hebeeinrichtung angeordnet. Alternativ kann die Sämaschine mit den daran angeordneten Säscharmodulen X an der Front des Schleppers und die Düngerspritze am Heck angeordnet sein.

Figur 5 bzw. Fig. 5.1 zeigen in Seitenansicht und Arbeitsfahrt nach rechts ein am Schlepper anzuhängendes Fahrgestell (40), dem eine hydraulische Hebeeinrichtung (41) für die an seinem Heck angekoppelte Direkt-Sämaschine (30) angeordnet ist, die zum Wenden am Feldende und zum Straßentransport den Fahrwerksrahmen (43) mitsamt den darauf ruhenden Düngerstreuer (21) (vom vorherigen Frontanbau) mitsamt einem eventuell zusätzlichen Samenvorratstank (31) hochstemmt und die am Fahrwerksrahmen angebaute Direkt-Sämaschine (30) vom Boden mit hoch nimmt.

Gemäß Fig. 5 ist ein Anhängefahrgestell 40 vorgesehen, das an die Zugeinrichtung 44 eines Schleppers 50 angehängt ist. Die Sämaschine 30 mit den daran angeordneten Säscharmodulen X ist an die vorgesehene Fahrgestellhebeeinrichtung 41 heckseitig angekoppelt. Auf dem Fahrgestell 40 ist ein Saatkorn-Zusatztank 31 mit abgeschlossener Überladeschnecke 32 angeordnet. In Fahrtrichtung davor ist ein Düngerzusatztank 21.1 vorgesehen, der mit einer Schlauchverbindung mit einer in Fig. 5 nicht dargestellten Flüssigdüngerpumpe einer Flüssigdüngerspritze bzw. deren Tankzulauf verbunden ist. Lediglich schematisch ist in Fig. 5 eine Düngerleitung 22 vom Düngerzusatztank 21.1 zum Säscharmodul X angedeutet.

Gemäß Fig. 5.1 ist vor dem Düngerzusatztank 21.1 die Flüssigdüngerspritze 21 aufgesattelt auf ein verlängertes Fahrgestell 49 angeordnet.

Figur 1 bis Figur 5 dokumentieren also eine ungewöhnlich neuheitliche Flexibilität der Arbeitsnutzung als Einzelgeräte ebenso als Kombinationsfunktionsglied der Schlepperanbau- ebenso Anhängekombination und wieder zurück mit einem Höchstmaß an betriebswirtschaftlichen Gebrauchswertnutzen der umfänglichen erfindungsgemäßen Direktsaattechnologie, so dass alle Voraussetzungen für eine rasche Schutzrechtserteilung gegeben sein müssten.

Der Nutzen daraus ist ein mehrfacher;
- Die klassische Direktsaat reduziert die Arbeitererledigungskosten bis zu € 200,00 und mehr je Hektar Saatfläche und verbilligt die Nahrungsmittelerzeugung;
- Sie reduziert den landwirtschaftlichen Dieselverbrauch um ca. 351 bis 401 je Hektar und den daraus reduzierten CO² und Stickoxid-Emissionsausstoß.
- CO²-Zertifikate stabilisieren und verbilligen ein weiteres mal die Lebensmittelerzeugung und helfen Existenz-sichernd der Landwirtschaft.
- Sie bringen bei der Veräußerung, der dem Fiskus bei der Verleihung keinen Cent gekosteten Zertifikat, zumindest UMST und andere Steuern in die Kassen.
- Die Direktsaat beinhaltet das reale Potential jährlich allein in der BRD Millionen Tonnen CO²/NO²-Ausstoß zu verhindern, wenn es vom Fiskus und dessen landwirtschaftlichen Beratungsstellen aller Art zielführend geführt und mittels Zertifikatausgabe gefordert werden wird.
P. P.: jenem Bundesland wird in der BRD bzw. der BRD wird (in der EU und global) die "Erstgeburt" sowie die Sach-Urheber/Musterführerschaft und Kompetentsführerschaft zuerkannt, das/die sie als "Pfadfinder" diesen Förderungsanschub realisiert.

Ein Direkt-Säschar-Modul gemäß der Erfindung für die Um/Nachrüstung herkömmlicher Sämaschinen jeder Art, ist **dadurch gekennzeichnet, dass** das Säschar-Modul X zu mehreren für die Weiterbildung und Nachrüstung gebrauchter oder/neuer herkömmlich bekannter SchlepperAnbau-Aufsattel-Anhänge- und Selbstfahrersämaschinen egal welchen Fabrikats, welcher Säscharbauart und -form, welcher Arbeitsbreite und Reihenzahl, deren Säscharaggregate verschlissen oder nicht mehr zeitgemäß sind, deren Saatkorn-Dosiertechnik allermeist aber noch einwandfrei funktioniert, mit der erklärten Nachrüst-Zielvorgabe einer kostenminimierten, aber zugleich Gebrauchswert-Nutzen-maximierten, neuheitlich klassischen Scheibenschar-Direktsä-/Banddüngemaschine zu restaurieren technisch hinreichend ausgebildet ist, und folgende neuheitliche Merkmale aufweist:
(dass mindestens drei) aus DE 197 30 822 C² bzw. EP 0 891 691 B2 erfindungsgemäß weitergebildete Scheibensäschare 6, 7, 8 und ihnen zugeordnet je eine Saataustragleitung 9, 10, 11 und zur Säschar-Tiefenführung vorzugsweise (drei) im Teleskop 12-12,5 vertikal zentral verstellbare Tragstützrollen 13, 14, 15 angeordnet sind, wovon die Rollen 15 von der zur Arbeitsrichtung parallel einstellbaren Laufrichtung in Diagonalrichtung umstellbar angeordnet sind, um den vom Düngerschar 8 über die Düngerrille bewusst gebildeten Erd-/Pflanzen-/Mulchdamm einzuebnen, wenn es witterungsbedingt geboten erscheint oder anderenfalls im Geradeauslauf z. B. Bei Starkregenaussicht den Damm zu stabilisieren um eine vorzeitige Düngerauflösung und -versickerung mindestens zu verzögern. Vorteilhafterweise ist mindestens die Tragstützrolle 15 mit einem gezackten Laufkranz versehen.

Das Säschar-Modul X kann an einem Parallelogramm 2-2.5 angeordnet und von diesem geführt sein.

Das Säschar-Modul X kann alternativ an einem Materialquerschnittmehreckigen Federelement 20 angeordnet und von diesem geführt sein. Das Federelement 20 kann an seiner oder um seine Befestigungsbasis spiralförmig gewunden sein.

Das Säschar-Modul X kann angeordnet an seinem Parallelogramm 2-2.5 oder an einem Federelement 20 zu mehreren im axialem Abstand zueinander auf einem gemeinsamen, zur Arbeitsrichtung quer und horizontal gelegten Zugbalken 1 entsprechend der Sämaschinenarbeitsbreite befestigt sein.

Bei dem erfindungsgemäßen Säschar-Modul X können mindestes die beiden die Samenrillen (a) und (b) aushebenden Säschare (6 und 7) hintereinander versetzt und mit ihrer konkaven Scharseite zueinander oder gegeneinander gerichtet gestellt jeweils in Arbeitsrichtung mit diagonalen Offnungsstellwinkel zwischen 7° bis 19° sowie mit ihrer konvexen Scheibenschar-Außenseite mit den gleichen Winkelgraden zum Boden hin gekippt angeordnet sein, wodurch sich die gegeneinander stemmenden Seitenkräfte neutralisieren.

Bei dem erfindungsgemäßen Säschar-Modul X kann etwa mittig zwischen den Samenrillen (a) bis (b) mit den gleichen Diagonal-Anstell- und Kippwinkel-Einstellungen der Schare 6 und 7 mindestens eine Düngerrillen(c)-öffnende Scharscheibe 8 angeordnet sein.

Bei dem erfindungsgemäßen Säschar-Modul X kann für den Anschluss des komplettierten Zugbalkens 1 an die jeweils vorgesehene Sämaschine ein dafür passgerechter Adapter mit Adapteranschluss vorgesehen sein.

Erfindungsgemäße Säschar-Module X können an eine bekannte, herkömmlich konventionelle Körner-Sämaschine anstelle deren ursprünglichen Säscharaggregates adaptiert sein, diese de facto zur Gebrauchswert höheren sowie klassisch echten neuheitlichen Direktsaattechnologieklasse mutieren lassen und technisch signifikant hochwertig aufwerten.

Das erfindungsgemäße Säschar-Modul X kann zusammen mit der Sämaschine 30 in bekannter Art und Weise an der Heckhebeeinrichtung eines Schleppers oder einer anderen Selbstfahrerarbeitsmaschine angeordnet sein und an deren Front kann ein x-beliebiger Front-Reihendüngerstreuer angeordnet sein, ist neuheitlich eine echt klassische Direktsaat/Dünger-Selbstfahrerkombinationsmaschine realisiert, deren Kombinationskomponenten jederzeit auch für "Solo"-Arbeiten entnehmbar zur Verfügung stehen.

Eine erfindungsgemäße Säscharmodul-Selbstfahrermaschinenkombination ist **dadurch gekennzeichnet, dass** einem Schlepper und/oder Selbstfahrerarbeitsmaschine ein Anhänge-/Aufsattelfahrgestell 40, dem eine Hebeeinrichtung 41 an seinem Heck für die Ankoppelung, Führung und Aushebung der Sämaschine 30 sowie eine Fahrgestellhebeeinrichtung 41 zugeordnet ist, die bei Betätigung den Fahrgestellrahmen 43 mit den darauf gestellten Saatkornvorratstank 31 und Reihendüngerstreuer 21 mitsamt der angekoppelten Sämaschine 30 abgestützt auf das Fahrwerk 44 zum Wenden am Feldrand und zur Straßenfahrt hochstemmt und sichert.

Das erfindungsgemäße Säschar-Einzelmodul X kann mit einer technisch bekannten Zug- oder Schubeinrichtung für menschliche, tierische oder/und maschinelle Säarbeit ausgerichtet sein.

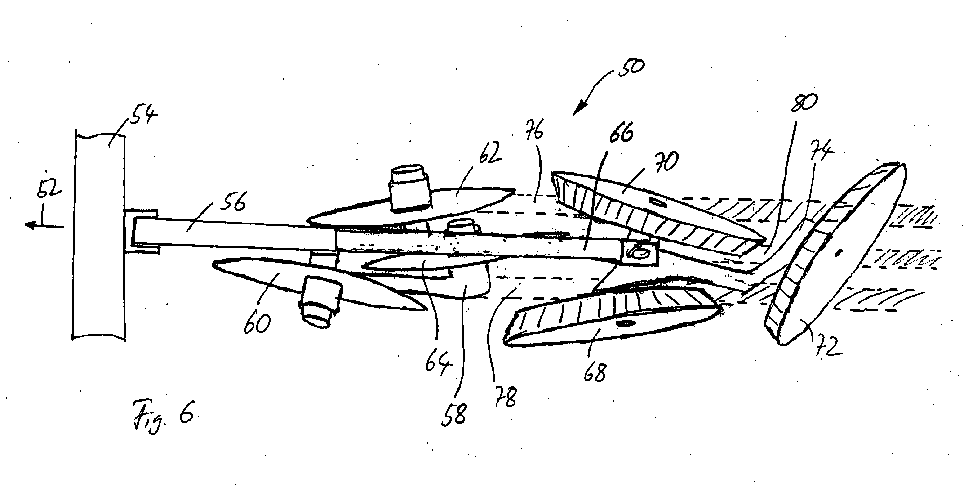

Die Darstellung der Fig. 6 zeigt ein erfindungsgemäßes Säschar-Modul 50 gemäß einer weiteren Ausführungsform der Erfindung. Das Säschar-Modul 50 wird in einer Arbeitsrichtung betrieben, die mittels eines Pfeils 52 angedeutet ist. Das Säschar-Modul 50 ist an einem quer zur Fahrtrichtung verlaufenden Zugbalken 54 mittels einer Parallelogrammaufhängung 56 angeordnet. Die Parallelogrammaufhängung 56 verbindet einen gemeinsamen Träger 58 mit dem Zugbalken 54. An dem gemeinsamen Träger 58, der lediglich schematisch dargestellt ist, sind insgesamt drei Scheibenschare 60, 62, 64 drehbar angeordnet. Der gemeinsame Träger 58 weist weiter einen sich entgegen der Fahrtrichtung gemäß dem Pfeil 52 erstreckenden Holm 66 auf, mit dem drei Räum- und Tragrollen 68, 70 und 72 verbunden sind. Die Räum- und Tragrollen 68, 70, 72 sind ihrerseits an einem gemeinsamen Rollenträger 74 drehbar befestigt, der höhenverstellbar mit dem Holm 66 verbunden ist. Dadurch kann ein Abstand in Höhenrichtung zwischen den Räumrollen 68, 70, 72 und dem Holm 66 verstellt werden, so dass wiederum die Scheibenschare 60, 62, 64, die ja drehbar an dem gemeinsamen Träger 58 befestigt sind, in ihrer Höhe relativ zu einer Bodenoberfläche eingestellt werden können. Dies ist deshalb erforderlich, da die spezielle Stellung der Scheibenschare 60, 62, 64 bewirkt, dass diese sich selbsttätig in den Boden einziehen. Mittels der Räumrollen 68, 70, 72 kann dadurch eine Tiefenbegrenzung für die Scheibenschare 60, 62, 64 geschaffen werden.

Wie zu erkennen ist, sind die Scheibenschare 60, 62, 64 alle quer zur Fahrtrichtung angestellt und gleichzeitig mit ihrer konvexen Seite zur Bodenebene hin gekippt. Dadurch ziehen sich die Scheibenschare 60, 62, 64 selbsttätig in den Boden ein und schneiden jeweils eine etwa V-förmige Rille aus der Bodenoberfläche aus und legen das ausgeschnittene Erdreich seitlich vor ihrer konkaven Seite ab. Zwei der Scheibenschare 60, 62 heben jeweils eine Saatrille 76, 78 aus, die in der Darstellung der Fig. 6 jeweils gestrichelt dargestellt sind. Das mittlere Scheibenschar 64 hebt eine Düngerrille 80 aus, die mittig zwischen den beiden Saatrillen 76, 78 liegt und ebenfalls gestrichelt angedeutet ist. Stromabwärts der Räum- und Tragrollen 68, 70, 72 sind die Saatrillen 76, 78 und die Düngerrille 80 selbstverständlich bereits wieder zugeräumt, da die Räum- und Tragrollen 68, 70, 72 jeweils seitlich neben den Rillen 76, 78, 80 abgelegtes Erdreich wieder in die jeweilige Rille hineinräumen.

Jedem der Scheibenschare 60, 62, die als Scheibensäschare wirken, ist ein in der Darstellung der Fig. 6 nicht dargestelltes Saatgutrohr zugeordnet, das entgegen der Fahrtrichtung gesehen hinter der konvexen Seite der Scheibenschare 60, 62 Saatgut in die erzeugten Saatrillen 76, 78 ablegt. Dem mittleren Scheibenschar 64 ist ein Düngerrohr zugeordnet, das ebenfalls entgegen der Fahrtrichtung gesehen hinter der konvexen Seite des Scheibenschares 64 angeordnet ist und Dünger in die ausgeschnittene Düngerrille 80 ablegt.

Der zugeräumte Zustand der Rillen 76, 78, 80 ist in der schematischen Darstellung der Fig. 6 durch eine leichte Schrägschraffur angedeutet.

Die Scheibenschare 60, 62, 64 sind jeweils kugelkalottenförmig ausgebildet, wobei sie eine geringe Bombierungstiefe aufweisen. Speziell weisen die Scheibenschare 60, 62, 64 jeweils einen Scheibendurchmesser von 330mm und eine Bombierungstiefe von 13,5mm auf. Die Scheiben sind so angestellt, dass sie eine Saatgutrille 76, 78 bzw. eine Düngerrille 80 ausheben, die etwa 4cm tief und auf Höhe der Bodenoberfläche etwa 2,5 bis 3cm breit ist. Die beiden Saatgutrillen 76, 78 weisen einen Abstand ihrer jeweiligen Mittelebenen von 12,5cm auf.

Die Wölbung der Scheibenschare 60, 62, 64 und deren Anstellwinkel quer zur Fahrtrichtung sowie gleichzeitig zur Höhenrichtung sind so aufeinander abgestimmt, dass auf Höhe der Bodenoberfläche eine vordere Umfangskante der Scheibenschare 60, 62, 64 jeweils parallel zur Fahrtrichtung liegt. Beispielsweise können die Scheibenschare 60, 62, 64 eine umlaufende Schneide aufweisen und die Scheiben sind dann so ausgerichtet, dass die auf der konvexen Seite liegende Schneidenfläche auf Höhe der Bodenoberfläche parallel zur Fahrtrichtung ausgerichtet ist. Dadurch lässt sich auf Höhe der Bodenoberfläche eine optimale Rollschneidwirkung erzielen und speziell auf der Bodenoberfläche oder kurz darunter liegende Pflanzenreste lassen sich problemlos und zügig durchschneiden. Dadurch wird vermieden, dass Pflanzenreste in die Saatrillen 76, 78 bzw. in die Düngerrille 80 gedrückt werden und dadurch den Saataufgang und das Pflanzenwachstum behindern.

Die beiden Scheibensäschare 60, 62 sind relativ zu einer die Fahrtrichtung gemäß dem Pfeil 52 enthaltenden und mittig zu den beiden Scheibensäscharen 60, 62 angeordneten Ebene in der betragsmäßig gleichen aber unterschiedlich gerichteten Winkelanordnung angeordnet. Die von den beiden Scheibensäscharen 60, 62 erzeugte Seitenkraft hebt sich dadurch gegeneinander auf und durch die Parallelogrammanordnung 56 muss lediglich die durch das Scheibenschar 64 erzeugte Seitenkraft abgestützt werden.

Die Räum- und Tragrollen 68, 70, 72 können von der dargestellten zur Fahrtrichtung schrägen Anordnung einzeln oder gemeinsam in eine zur Fahrtrichtung parallele Ausrichtung gebracht werden, um eine mehr oder weniger starke Räumwirkung zu erreichen. Zwischenstellung sind möglich. Mittel zum Verstellen der Ausrichtung der Räum- und Tragrollen 68, 70, 72 sind in der schematischen Darstellung der Fig. 6 nicht gezeigt.

## Patentansprüche

1. Säschar-Modul (X; 50) für die Direktsaat
- mit wenigstens drei drehbar gelagerten Scheibenscharen (6, 7, 8; 60, 62, 64),
- wobei wenigstens zwei der Scheibenschare (6, 7; 60, 62) als Scheibensäschare an einem gemeinsamen Träger (58) quer zur Fahrtrichtung (52) voneinander beabstandet, mit der konkaven Seite in Fahrtrichtung (52) weisend quer zur Fahrtrichtung (52) angestellt, mit der konvexen Seite zur Bodenoberfläche hin gekippt so angeordnet sind, um mit der jeweils in Fahrtrichtung (52) vorne liegenden Umfangskante eine Rollschneidwirkung zum Aufschneiden jeweils einer Saatrille (a, b; 76, 78) zu erzeugen,
- wobei jedem der wenigstens zwei Scheibensäschare (6, 7; 60, 62) eine Saatgutaustragsleitung (11) zugeordnet ist, die jeweils in Fahrtrichtung hinter der konvexen Seite der Scheibensäschare (6, 7; 60, 62) Saatgut in die erzeugte Saatrille (a, b; 76, 78) ablegt,
- mit wenigstens einer Tragrolle (13, 14, 15; 68, 70, 72) zur Tiefenführung der Scheibensäschare (6, 7, 8; 60, 62, 64), wobei die Tragrolle (13, 14, 15; 68, 70, 72) höhenverstellbar mit dem gemeinsamen Träger (58) verbunden ist, und
- mit wenigstens einer Räumeinrichtung zum Zuräumen der Saatrillen (a, b; 76, 78),
- wobei ein drittes Scheibenschar (8; 64) ebenfalls mit der konkaven Seite in Fahrtrichtung (52) weisend quer zur Fahrtrichtung angestellt, mit der konvexen Seite zur Bodenoberfläche hin gekippt und in Fahrtrichtung (52) gesehen mittig zwischen den wenigstens zwei Scheibensäscharen (6, 7; 60, 62) so angeordnet ist, um mit der in Fahrtrichtung (52) vorne liegenden Umfangskante eine Rollschneidwirkung zum Aufschneiden einer mittig zwischen den Saatrillen (a, b; 76, 78) liegenden Düngerrille (c; 80) zu erzeugen,
- wobei dem dritten Scheibenschar (8; 64) ein Düngerrohr (22) zugeordnet ist, das in Fahrtrichtung hinter der konvexen Seite des Scheibenschares (8; 64) Dünger in die ausgeschnittene Düngerrille (c; 80) ablegt,
- wobei das dritte Scheibenschar (8; 64) zur Erzeugung der Düngerrille (c; 80) an dem gemeinsamen Träger (58) angeordnet ist,
- wobei die Scheibenschare (6, 7, 8; 60, 62, 64) kalottenförmig ausgebildet sind und
- wobei die Wölbung und der Anstellwinkel der Scheibenschare (6, 7, 8; 60, 62, 64) so aufeinander abgestimmt sind, dass mit der jeweils in Fahrtrichtung vorne liegenden Umfangskante eine Rollschneidwirkung erzielt wird.

2. Säschar-Modul nach Anspruch 1, **dadurch gekennzeichnet, dass** die beiden Scheibensäschare (60, 62) mit der konvexen Seite einander zugewandt angeordnet sind.

3. Säschar-Modul nach Anspruch 1 oder 2, **dadurch gekennzeichnet, dass** die wenigstens drei Scheibensäschare (6, 7, 8; 60, 62, 64) relativ zu einer die Fahrtrichtung (52) enthaltenden Ebene in der betragsmäßig gleichen Winkelanordnung angeordnet sind.

4. Säschar-Modul nach einem der vorstehenden Ansprüche, **dadurch gekennzeichnet, dass** die Saatrillen (a, b; 76, 78) aushebenden Scheibensäschare (6, 7; 60, 62) mit ihrer konkaven Scharseite jeweils in Arbeitsrichtung (52) zwischen 7° und 19° quer zur Arbeitsrichtung (52) angestellt und mit ihrer konvexen Scharseite zum Boden hin mit 7° bis 19° gekippt angeordnet sind.

5. Säschar-Modul nach einem der vorstehenden Ansprüche, **dadurch gekennzeichnet, dass** die Scheibenschare (6, 7, 8; 60, 62, 64) ein Verhältnis von Bombierungstiefe zu Scheibendurchmesser von 1:20 bis 1:50 haben.

6. Säschar-Modul nach einem der vorstehenden Ansprüche, **dadurch gekennzeichnet, dass** die wenigstens eine Tragrolle (13, 14, 15; 68, 70, 72) an dem gemeinsamen Träger (58) angeordnet ist.

7. Säschar-Modul nach einem der vorstehenden Ansprüche, **dadurch gekennzeichnet, dass** die Räumeinrichtung an dem gemeinsamen Träger (58) angeordnet ist.

8. Säschar-Modul nach einem der vorstehenden Ansprüche, **dadurch gekennzeichnet, dass** die Räumeinrichtung wenigstens eine schräg zur Fahrtrichtung angestellte Räumrolle aufweist.

9. Säschar-Modul nach wenigstens einem der vorstehenden Ansprüche, **dadurch gekennzeichnet, dass** in Fahrtrichtung (52) gesehen hinter den beiden Scheibensäscharen (6, 7; 60, 62) jeweils eine schräg zur Fahrtrichtung (52) anstellbare Räumrolle mit trapezförmigen Querschnitt oder pultdachförmigen Laufkranzquerschnitt und gezacktem Außenumfang vorgesehen ist, die jeweils gleichzeitig die Funktion einer Tragrolle (14, 15; 68, 70) übernimmt.

10. Direktsaat-Maschinenkombination mit einer konventionellen, zum Anbau oder zur Ankoppelung an einen Ackerschlepper (50) vorgesehenen Sämaschine (30), deren Säschare entfernt sind, sowie wenigstens einem Säschar-Modul (X) nach wenigstens einem der vorstehenden Ansprüche, wobei das wenigstens eine Säschar-Modul (X) in Fahrtrichtung hinten an den Ackerschlepper (50) oder die Sämaschine (30) angebaut ist und wenigstens eine Saatgutleitung (11) von der Sämaschine (30) zum Säschar-Modul (X) vorgesehen ist, sowie wenigstens einer konventionellen Flüssigdüngerspritze (21) oder einem konventionellen Reihendüngerstreuer, wobei wenigstens eine Düngerleitung (22) von der/dem Flüssigdüngerspritze/Reihendüngerstreuer (21) zu dem Säschar-Modul (X) vorgesehen ist.

11. Direktsaat-Maschinenkombination nach Anspruch 10, **dadurch gekennzeichnet, dass** die Sämaschine (30) mit dem Säscharmodul (X) am Heck des Ackerschleppers (50) angebaut ist und dass die Flüssigdüngerspritze/Reihendüngerstreuer (21) an der Front des Ackerschleppers (50) angebaut ist.

12. Direktsaat-Maschinenkombination nach Anspruch 10 oder 11, **dadurch gekennzeichnet, dass** das wenigstens eine Säschar-Modul (X₁, X₂, X₃) an einem quer zur Fahrtrichtung vorgesehenen Zugbalken (1) der Sämaschine (30) angebaut und quer zur Fahrtrichtung entlang dem Zugbalken (1) verschiebbar angeordnet ist.

13. Direktsaat-Maschinenkombination nach Anspruch 10, 11 oder 12, **dadurch gekennzeichnet, dass** ein an einen Ackerschlepper (50) angehängtes oder aufgesatteltes Fahrgestell (40, 49) mit wenigstens einer Tragräderachse vorgesehen ist, wobei auf dem Fahrgestell (40, 49) wenigstens die Sämaschine (30) und/oder die/der Flüssigdüngerspritze/Reihendüngerstreuer (21) angeordnet ist und wobei das wenigstens eine Säschar-Modul (X) an das Fahrgestell (40, 49) angekoppelt ist.

14. Direktsaat-Maschinenkombination nach Anspruch 13, **dadurch gekennzeichnet, dass** die Sämaschine (30) und/oder die/der Flüssigdüngerspritze/Reihendüngerstreuer (21) an oder auf dem Fahrgestell (40, 49) angeordnet sind und dass das Fahrgestell (40, 49) eine Anhebevorrichtung (41) zum Abheben des wenigstens einen Säscharmoduls (X) von der Bodenoberfläche aufweist.

15. Direktsaat-Maschinenkombination nach Anspruch 14, **dadurch gekennzeichnet, dass** die Anhebevorrichtung (41) eine Fahrgestellhebeeinrichtung zum Anheben des Fahrgestells (40, 49) relativ zur wenigstens einen Tragräderachse und/oder eine Säschar-Modul-Hebeeinrichtung zum Anheben wenigstens des oder der Säschar-Module (X) relativ zum Fahrgestell (40, 49) aufweist.

16. Direktsaatverfahren mit wenigstens einem Säschar-Modul nach einem der Ansprüche 1 bis 9 mit folgenden Schritten:
- Aufschneiden von zwei parallel zueinander angeordneten Saatgutrillen (a, b; 76,78) mittels jeweils eines kalottenförmigen Scheibensäschares (6, 7; 60, 62), wobei die Scheibensäschare (6,7; 60, 62) an einem gemeinsamen Träger (58) quer zur Fahrtrichtung (52) voneinander beabstandet, mit der konkaven Seite in Fahrtrichtung (52) weisend quer zur Fahrtrichtung (52) angestellt, mit der konvexen Seite zur Bodenoberfläche hin gekippt so angeordnet sind, um mit der jeweils in Fahrtrichtung (52) vorne liegenden Umfangskante eine Rollschneidwirkung zu erzeugen,
- Ablegen von Saatgut in die erzeugten Saatrillen (a, b; 76, 78) mittels einer Saatgutaustragsleitung (11) in Fahrtrichtung (52) hinter der konvexen Seite der Scheibensäschare (6,7; 60, 62)
- Zuräumen der Saatrillen (a, b; 76, 78) mittels wenigstens einer Räumeinrichtung (13, 14, 15; 68, 70, 72),
- Aufschneiden einer mittig zwischen den Saatrillen (a, b; 76, 78) liegenden Düngerrille (c; 80) mittels eines kalottenförmigen Scheibenschares (8; 64), wobei das Scheibenschar (8; 64) mit der konkaven Seite in Fahrtrichtung (52) weisend quer zur Fahrtrichtung (52) angestellt, mit der konvexen Seite zur Bodenoberfläche hin gekippt und in Fahrtrichtung (52) gesehen mittig zwischen den zwei Scheibensäscharen (6, 7; 60, 62) angeordnet ist, um mit der in Fahrtrichtung (52) vorne liegenden Umfangskante eine Rollschneidwirkung zu erzeugen und
- Ablegen von Dünger in die erzeugte Düngerrille (c; 80) mittels eines Düngerrohres (22) in Fahrtrichtung hinter der konvexen Seite des Scheibenschares (8; 64).

## Claims

1. Seed drill coulter module (X; 50) for direct sowing,
- having at least three rotatably mounted disc coulters (6, 7, 8; 60, 62, 64),
- where at least two of the disc coulters (6, 7; 60, 62) are at a distance from one another as disc seed drill coulters transverse to the direction of travel (52) on a common carrier (58), are angled transverse to the direction of travel (52) with the concave side facing in the direction of travel (52) and with the convex side arranged tilted towards the soil surface such as to generate with the circumferential edge at the front in the direction of travel (52) a roll-cutting effect for making a seed furrow (a, b; 76, 78),
- where each of the at least two disc coulters (6, 7; 60, 62) is assigned a seed delivery tube (11) which deposits seed into the seed furrow (a, b; 76, 78) made in the direction of travel behind the convex side of the disc coulters (6, 7; 60, 62),
- having at least one idler wheel (13, 14, 15; 68, 70, 72) for depth control of the disk coulters (6, 7, 8; 60, 62, 64), where the idler wheel (13, 14, 15; 68, 70, 72) is connected height-adjustably to the common carrier (58), and
- having at least one covering device for covering over the seed furrows (a, b; 76, 78),
- where a third disc coulter (8; 64) is likewise angled transverse to the direction of travel with the concave side facing in the direction of travel (52) and with the convex side arranged tilted towards the soil surface, and when viewed in the direction of travel (52) is arranged centrally between the at least two disc coulters (6, 7; 60, 62) such as to generate with the circumferential edge at the front in the direction of travel (52) a roll-cutting effect for making a fertilizer furrow (c; 80) centrally between the seed furrows (a, b; 76, 78),
- where the third disc coulter (8; 64) is assigned a fertilizer tube (22) that deposits fertilizer into the cut fertilizer furrow (c; 80) in the travel direction behind the convex side of the disc coulter (8; 64),
- where the third disc coulter (8; 64) for making the fertilizer furrow (c; 80) is arranged on the common carrier (58),
- where the disc coulters (6, 7, 8; 60, 62, 64) are designed dished and
- where the curvature and the pitch angle of the disc coulters (6, 7, 8; 60, 62, 64) are matched to one another such that a roll-cutting effect is achieved with the circumferential edge at the front in the direction of travel.

2. Seed drill coulter module according to Claim 1, **characterized in that** the two disc coulters (60, 62) are arranged with the convex sides facing one another.

3. Seed drill coulter module according to Claim 1 or 2, **characterized in that** the at least three disc coulters (6, 7, 8; 60, 62, 64) are arranged relative to a plane including the direction of travel (52) in an angular arrangement having identical values.

4. Seed drill coulter module according to one of the preceding claims, **characterized in that** the disc coulters (6, 7; 60, 62) tilling the seed furrows (a, b; 76, 78) are angled between 7° and 19° transverse to the working direction (52) with their concave coulter side in the working direction (52) and tilted at 7° to 19° with their convex coulter side towards the soil.

5. Seed drill coulter module according to one of the preceding claims, **characterized in that** the disc coulters (6, 7, 8; 60, 62, 64) have a ratio of 1:20 to 1:50 for the depth of dishing to the disc diameter.

6. Seed drill coulter module according to one of the preceding claims, **characterized in that** the at least one idler wheel (13, 14, 15; 68, 70, 72) is arranged on the common carrier (58).

7. Seed drill coulter module according to one of the preceding claims, **characterized in that** the covering device is arranged on the common carrier (58).

8. Seed drill coulter module according to one of the preceding claims, **characterized in that** the covering device has at least one covering roller angled obliquely to the direction of travel.

9. Seed drill coulter module according to one of the preceding claims, **characterized in that** a covering roller which can be angled obliquely to the direction of travel (52) with trapezoidal cross-section or shed-roof-like running tread cross-section and serrated outer circumference is provided behind the two disc coulters (6, 7; 60, 62) when viewed in the direction of travel (52) and assumes at the same time the function of an idler wheel (14, 15; 68, 70).

10. Direct sowing machine combination having a conventional seed drill (30) intended for attachment or hitching to a tractor (50), of which machine the seed drill coulters are removed, and having at least one seed drill coulter module (X) according to at least one of the preceding claims, where the at least one seed drill coulter module (X) is attached at the rear of the tractor (50) or the seed drill (30) in the direction of travel and at least one seed tube (11) from the seed drill (30) to the seed drill coulter module (X) is provided, and having at least one conventional liquid fertilizer sprayer (21) or conventional row fertilizer spreader, where at least one fertilizer tube (22) is provided from the liquid fertilizer sprayer/row fertilizer spreader (21) to the seed drill coulter module (X).

11. Direct sowing machine combination according to Claim 10, **characterized in that** the seed drill (30) with the seed drill coulter module (X) is attached to the rear of the tractor (50) and **in that** the liquid fertilizer sprayer/row fertilizer spreader (21) is attached to the front of the tractor (50).

12. Direct sowing machine combination according to Claim 10 or 11, **characterized in that** the at least one seed drill coulter module (X₁, X₂, X₃) is attached to a towing bar (1) of the seed drill (30) provided transverse to the direction of travel and arranged movably along the towing bar (1) transverse to the direction of travel.

13. Direct sowing machine combination according to Claim 10, 11 or 12, **characterized in that** a chassis (40, 49) hitched to or semi-mounted on a tractor (50) is provided with at least one idler wheel axle, where at least the seed drill (30) and/or the liquid fertilizer sprayer/row fertilizer spreader (21) is arranged on the chassis (40, 49) and where the at least one seed drill coulter module (X) is hitched to the chassis (40, 49).

14. Direct sowing machine combination according to Claim 13, **characterized in that** the seed drill (30) and/or the liquid fertilizer sprayer/row fertilizer spreader (21) are arranged at or on the chassis (40, 49) and **in that** the chassis (40, 49) has a lifting device (41) for lifting the at least one seed drill coulter module (X) from the soil surface.

15. Direct sowing machine combination according to Claim 14, **characterized in that** the lifting device (41) has a chassis lifting device for lifting the chassis (40, 49) relative to at least one idler wheel axle and/or a seed drill coulter module lifting device for lifting at least the one or several seed drill coulter modules (X) relative to the chassis (40, 49).

16. Direct sowing method having at least one seed drill coulter module according to one of Claims 1 to 9 including the following steps:
- cutting of two seed furrows (a, b; 76, 78) arranged parallel to one another by means of one dished disc coulter (6, 7; 60, 62) each, where the disc coulters (6, 7; 60, 62) are at a distance from one another on a common carrier (58), are angled transverse to the direction of travel (52) with the concave side facing in the direction of travel (52) and with the convex side arranged tilted towards the soil surface such as to generate with the circumferential edge at the front in the direction of travel (52) a roll-cutting effect,
- depositing of seed into the created seed furrows (a, b; 76, 78) by means of a seed delivery tube (11) in the direction of travel (52) behind the convex side of the disc coulters (6, 7; 60, 62),
- covering over the seed furrows (a, b; 76, 78) by means of at least one covering device (13, 14, 15; 68, 70, 72),
- cutting of a fertilizer furrow (c; 80) centrally between the seed furrows (a, b; 76, 78) by means of a dished disc coulter (8; 64), where said disc coulter (8; 64) is angled transverse to the direction of travel (52) with its concave side facing in the direction of travel (52) and with its convex side arranged tilted towards the soil surface, and when viewed in the direction of travel (52) is arranged centrally between the two disc coulters (6, 7; 60, 62) in order to generate with the circumferential edge at the front in the direction of travel (52) a roll-cutting effect, and
- depositing of fertilizer into the created fertilizer furrow (c; 80) by means of a fertilizer tube (22) in the direction of travel behind the convex side of the disc coulter (8; 64).

## Revendications

1. Module de socs semoirs (X ; 50) pour le semis direct
- comprenant au moins trois socs à disque (6, 7, 8 ; 60, 62, 64) montés de façon à pouvoir tourner,
- sachant qu'au moins deux des socs à disque (6, 7 ; 60, 62), ayant fonction de socs semoirs à disque, sont disposés distants l'un de l'autre transversalement au sens de la marche (52) sur un support commun (58), sont placés transversalement au sens de la marche (52) avec leur face concave orientée dans le sens de la marche (52), et inclinés avec leur face convexe vers la surface du sol, de sorte à engendrer un effet de découpe rotative avec leurs bords circonférentiels respectifs situés à l'avant dans le sens de la marche (52) afin de tracer chacun un sillon d'ensemencement (a, b ; 76, 78),
- sachant qu'à chacun des au moins deux socs semoirs à disque (6, 7 ; 60, 62) est associé un tube d'ensemencement (11) qui dépose, derrière la face convexe des socs semoirs à disque (6, 7 ; 60, 62) dans le sens de la marche, de la semence dans les sillons d'ensemencement respectifs tracés (a, b ; 76, 78),
- comprenant au moins un rouleau porteur (13, 14, 15 ; 68, 70, 72) pour le guidage en profondeur des socs semoirs à disque (6, 7, 8 ; 60, 62, 64), le rouleau porteur (13, 14, 15 ; 68, 70, 72) étant relié au support commun (58) de manière réglable en hauteur, et
- au moins un dispositif de comblement pour combler les sillons d'ensemencement (a, b ; 76, 78),
- sachant qu'un troisième soc à disque (8 ; 64) est également disposé transversalement au sens de la marche avec sa face concave orientée dans le sens de la marche (52), incliné avec sa face convexe vers la surface du sol et, vu dans le sens de la marche (52), centré entre les au moins deux socs semoirs à disque (6, 7 ; 60, 62) de sorte à engendrer un effet de découpe rotative avec son bord circonférentiel situé à l'avant dans lé sens de la marche (52) afin de tracer un sillon de fertilisation (c ; 80) centré entre les sillons d'ensemencement (a, b ; 76, 78),
- sachant qu'au troisième soc à disque (8 ; 64) est associé un tube de fertilisation (22) qui dépose, derrière la face convexe du soc à disque (8 ; 64) dans le sens de la marche, du fertilisant dans le sillon de fertilisation (c ; 80) tracé,
- que le troisième soc à disque (8 ; 64) destiné à tracer le sillon de fertilisation (c ; 80) est disposé sur le support commun (58),
- que les socs à disque (6, 7, 8 ; 60, 62 ,64) ont une forme de calotte, et
- que la cambrure et l'angle d'attaque des socs à disque (6, 7, 8 ; 60, 62 ,64) sont ajustés entre eux de sorte à obtenir un effet de découpe rotative avec les bords circonférentiels respectifs situés à l'avant dans le sens de la marche.

2. Module de socs semoirs selon la revendication 1, **caractérisé en ce que** les deux socs semoirs à disque (60, 62) sont orientés l'un vers l'autre avec leurs faces convexes.

3. Module de socs semoirs selon la revendication 1 ou 2, **caractérisé en ce que** les au moins trois socs semoirs à disque (6, 7, 8 ; 60, 62 ,64) sont disposés selon un arrangement angulaire d'un montant identique par rapport à un plan comprenant le sens de la marche (52).

4. Module de socs semoirs selon l'une des revendications précédentes, **caractérisé en ce que** les socs semoirs à disque (6, 7 ; 60, 62) traçant les sillons d'ensemencement (a, b ; 76, 78) sont disposés avec leurs faces concaves dans le sens du travail (52) selon un angle compris entre 7° et 19° transversalement par rapport au sens du travail (52) et inclinés vers le sol avec leurs faces convexes selon un angle de 7° jusqu'à 19°.

5. Module de socs semoirs selon l'une des revendications précédentes, **caractérisé en ce que** le rapport entre la profondeur de galbage et le diamètre des socs à disque (6, 7, 8 ; 60, 62, 64) est compris entre 1:20 et 1:50.

6. Module de socs semoirs selon l'une des revendications précédentes, **caractérisé en ce que** l'au moins un rouleau porteur (13, 14, 15 ; 68, 70, 72) est disposé sur le support commun (58).

7. Module de socs semoirs selon l'une des revendications précédentes, **caractérisé en ce que** le dispositif de comblement est disposé sur le support commun (58).

8. Module de socs semoirs selon l'une des revendications précédentes, **caractérisé en ce que** le dispositif de comblement présente au moins une roue de comblement disposée en biais par rapport au sens de la marche.

9. Module de socs semoirs selon au moins une des revendications précédentes, **caractérisé en ce que**, vu dans le sens de la marche (52), est prévue derrière chacun des deux socs semoirs à disque (6, 7 ; 60, 62) une roue de comblement pouvant être placée en biais par rapport au sens de la marche (52) et présentant une coupe transversale trapézoïdale ou une coupe transversale de bande de roulement en forme de toit à une pente ainsi qu'un pourtour extérieur dentelé, qui remplit en même temps la fonction d'un rouleau porteur (14, 15 ; 68, 70).

10. Combinaison de machines de semis direct, comprenant un semoir (30) conventionnel prévu pour être monté sur ou attelé à un tracteur agricole (50) et dont les socs semoirs ont été retirés, ainsi qu'au moins un module de socs semoirs (X) selon au moins une des revendications précédentes, dans laquelle l'au moins un module de socs semoirs (X) est monté dans le sens de la marche derrière le tracteur agricole (50) ou le semoir (30), et dans laquelle sont prévus au moins un tube d'ensemencement (11) allant du semoir (30) au module de socs semoirs (X), ainsi qu'au moins un distributeur conventionnel de fertilisant liquide (21) ou un épandeur conventionnel de fertilisant en ligne, sachant qu'est prévu au moins un tube de fertilisation (22) allant du distributeur de fertilisant liquide/de l'épandeur de fertilisant en ligne (21) au module de socs semoirs (X).

11. Combinaison de machines de semis direct selon la revendication 10, **caractérisée en ce que** le semoir (30) avec le module de socs semoirs (X) sont montés à l'arrière du tracteur agricole (50) et que le distributeur de fertilisant liquide/l'épandeur de fertilisant en ligne (21) est monté à l'avant du tracteur agricole (50).

12. Combinaison de machines de semis direct selon la revendication 10 ou 11, **caractérisée en ce que** l'au moins un module de socs semoirs (X₁, X₂, X₃) est disposé sur un tirant (1) du semoir (30) prévu transversalement au sens de la marche et peut être déplacé transversalement au sens de la marche le long du tirant (1).

13. Combinaison de machines de semis direct selon la revendication 10, 11 ou 12, **caractérisée en ce qu'**est prévu un châssis (40, 49) avec au moins un essieu de roues porteuses accroché ou accouplé à un tracteur agricole (50), sachant que sur le châssis (40, 49) est/sont disposé(s) au moins le semoir (30) et/ou le distributeur de fertilisant liquide/l'épandeur de fertilisant en ligne (21) et que l'au moins un module de socs semoirs (X) est accouplé au châssis (40, 49).

14. Combinaison de machines de semis direct selon la revendication 13, **caractérisée en ce que** le semoir (30) et/ou le distributeur de fertilisant liquide/l'épandeur de fertilisant en ligne (21) est/sont disposés contre ou sur le châssis (40, 49) et que le châssis (40, 49) présente un dispositif de levage (41) pour soulever de la surface du sol l'au moins un module de socs semoirs (X).

15. Combinaison de machines de semis direct selon la revendication 14, **caractérisée en ce que** le dispositif de levage (41) présente un organe de levage de châssis pour soulever le châssis (40, 49) par rapport à l'au moins un essieu de roues porteuses, et/ou un organe de levage de module de socs semoirs pour soulever au moins le ou les module(s) de socs semoirs (X) par rapport au châssis (40, 49).

16. Procédé de semis direct avec au moins un module de socs semoirs selon l'une des revendications 1 à 9, comprenant les étapes suivantes :
- creusement de deux sillons d'ensemencement (a, b ; 76, 78) parallèles entre eux au moyen de respectivement un soc semoir à disque (6, 7 ; 60, 62) en forme de calotte, sachant que les socs semoirs à disque (6, 7 ; 60, 62) sont disposés distants l'un de l'autre transversalement au sens de la marche (52) sur un support commun (58), sont placés transversalement au sens de la marche (52) avec leurs faces concaves orientées dans le sens de la marche (52), et inclinés avec leur face convexe vers la surface du sol, de sorte à engendrer un effet de creusement rotatif avec leurs bords circonférentiels respectifs situés à l'avant dans le sens de la marche (52),
- dépôt de semences dans les sillons d'ensemencement créés (a, b ; 76, 78), au moyen d'un tube d'ensemencement (11) dans le sens de la marche (52) derrière la face convexe des socs semoirs à disque (6, 7 ; 60, 62),
- comblement des sillons d'ensemencement (a, b ; 76.78) au moyen d'au moins un dispositif de comblement (13, 14, 15 ; 68, 70, 72),
- creusement d'un sillon de fertilisation (c ; 80) centré entre les sillons d'ensemencement (a, b ; 76, 78) au moyen d'un soc à disque (8 ; 64) en forme de calotte, sachant que le soc à disque (8 ; 64) est placé avec sa face concave orientée dans le sens de la marche (52) transversalement au sens de la marche (52), incliné avec sa face convexe vers la surface du sol et, vu dans le sens de la marche (52), centré entre les deux socs semoirs à disque (6, 7 ; 60, 62) de sorte à engendrer un effet de creusement rotatif avec son bord circonférentiel situé à l'avant dans le sens de la marche (52) et
- dépôt de fertilisant dans le sillon de fertilisation créé (c ; 80), au moyen d'un tube de fertilisation (22) dans le sens de la marche derrière la face convexe du soc à disque (8 ; 64).
